# EUROPEAN PATENT APPLICATION

(11) **EP 4 775 544 A1**
(43) Date of publication of application: **15.07.2026**
(21) Application number: 24862768.9
(22) Date of filing: 03.09.2024
(51) Int. Cl.: C01G 35/00, C09C 1/00, C09D 17/00, H01M 4/36

(54) **TANTALIC ACID COMPOUND DISPERSION AND METHOD FOR PRODUCING SAME**

(30) Priority: 08.09.2023 JP 2023146510; 07.03.2024 JP 2024034992
(71) Applicant: Mitsui Kinzoku Company, Limited, Tokyo 141-8584 (JP)
(72) Inventor: MIURA, Takashi, Omuta-shi, Fukuoka 836-0003 (JP); MOTONO, Ryuji, Omuta-shi, Fukuoka 836-0003 (JP); HARA, Syuhei, Omuta-shi, Fukuoka 836-0003 (JP)
(74) Representative: Parker, Andrew James
(86) International application number: PCT/JP2024/031529
(87) International publication number: WO 2025/053116

(57) **Abstract**

The tantalate compound dispersion of the present invention contains tantalum, and contains at least one element X selected from the group consisting of an alkali metal element and/or an alkaline earth metal element; and a phosphorus compound and/or a chlorine compound, wherein a particle size (D50) of particles in the tantalate compound dispersion by a dynamic light scattering method is 1000 nm or less. The tantalate compound dispersion of the present invention is a tantalate compound dispersion containing tantalum, containing: at least one element X selected from the group consisting of an alkali metal element and/or an alkaline earth metal element; and a phosphorus compound and/or a chlorine compound, wherein a maximum value of transmittance in a wavelength region of 400 nm to 760 nm is 70%T or more.

## Description

### Technical Field

The present invention relates to a tantalate compound dispersion and a method for producing the same.

### Background Art

Tantalate compounds are used as materials in optoelectronics, catalysts, and the like. As a tantalate compound that can be used as a coating agent for the surfaces of various components, is composed of uniform particles, and can be stored for a long period of time, Patent Literature 1 discloses a tantalum oxide sol. In addition, tantalate compounds, particularly lithium tantalate, have excellent optical, nonlinear, and electro-optic properties, and are employed in piezoelectric devices, nonlinear optical materials, battery materials, and the like. For example, in a composite active material particle capable of reducing battery resistance generated in an all-solid-state lithium ion battery, lithium tantalate is mentioned as a lithium ion conductive oxide that coats at least a part of the surface of the composite active material particle.

### Citation List

### Patent Literature

Patent Literature 1: JP H8-143315 A

### Summary of Invention

### Technical Problem

However, since the tantalum oxide sol disclosed in Patent Literature 1 contains an organic component that is hardly volatilized, such as oxalic acid, the organic component may be a factor that hinders formation of a uniform film, and may be a factor that hinders the catalytic action when the tantalum oxide sol is used as an additive of a catalyst. In addition, lithium tantalate has poor dispersibility and solubility in water as compared with lithium niobate, and is likely to generate a precipitate due to temporal changes, and is not excellent in storage stability.

In view of the above problems, an object of the present invention is to provide a tantalate compound dispersion having high dispersibility in a polar solvent, particularly water, good solubility in water, and excellent storage stability, and a method for producing the same.

### Solution to Problem

The tantalate compound dispersion of the present invention that has been made to solve the above problems is characterized in that it is a tantalate compound dispersion containing: tantalum; at least one element X selected from the group consisting of an alkali metal element and/or an alkaline earth metal element; and a phosphorus compound and/or a chlorine compound, wherein
a particle size (D50) of particles in the tantalate compound dispersion by a dynamic light scattering method is 1000 nm or less.

The tantalate compound dispersion of the present invention contains: tantalum; at least one element X selected from the group consisting of an alkali metal element and/or an alkaline earth metal element; and a phosphorus compound and/or a chlorine compound, wherein when the particle size (D50) of particles in the tantalate compound dispersion by a dynamic light scattering method is 1000 nm or less, it is preferable from the viewpoint of improving the dispersibility and solubility in a polar solvent, particularly water.

The tantalate compound dispersion of the present invention contains tantalum. It is considered that tantalum exists as an oxide in the tantalate compound dispersion of the present invention, for example, as an anion such as TaO₃⁻ or a polyoxometalate (polyacid) ion in which a plurality of tantalum atoms and oxygen atoms are bonded.

The tantalate compound dispersion of the present invention contains at least one element X selected from the group consisting of an alkali metal element and/or an alkaline earth metal element. That is, it is presumed that the tantalate in the tantalate compound dispersion of the present invention is present in the dispersion as an ion that is ionically bonded to an ion of at least one element X selected from the group consisting of an alkali metal element and/or an alkaline earth metal element. In the tantalate compound dispersion of the present invention, hydroxide ions are present as anions, whereas halide ions such as fluoride and chloride ions are scarcely present, and it is considered that an alkali metal element and an alkaline earth metal element exist as cations, and therefore tantalum exists as an anion such as TaO₃⁻ or a polyoxometalate (polyacid) ion in which a plurality of tantalum atoms and oxygen atoms are bonded.

Furthermore, it is preferable that the element X contains Li. The element X is not limited to only one alkali metal element of Li, and it is preferable that the element X is two alkali metal elements of Li and Na or K or three alkali metal elements of Li, Na and K. Furthermore, the element X may be one alkali metal element of Na or K, or two alkali metal elements of Na and K.

The tantalate compound dispersion of the present invention contains a phosphorus compound. In the tantalate compound dispersion of the present invention, the phosphorus compound preferably contains one or more selected from an inorganic phosphorus compound, an organic phosphorus compound, and a salt thereof.

Examples of the inorganic phosphorus compound include inorganic phosphoric acids, particularly phosphoric acids, phosphonic acids, and phosphinic acids. Specifically, examples of the phosphoric acids include phosphoric acid (CAS No. 7664-38-2), condensed phosphoric acid, pyrophosphoric acid (CAS No. 2466-09-3), and polyphosphoric acid (CAS No. 8071-16-1). Examples of the phosphonic acids include phosphorous acid (CAS No. 13598-36-2) and hypophosphorous acid (CAS No. 6303-21-5). Examples of the phosphinic acids include phosphinic acid (CAS No. 6303-21-5).

Examples of the organic phosphorus compound include phosphoric acid esters, organic phosphorous acid esters, organic phosphonic acids, and organic phosphines. Specifically, examples of the organic phosphorus compound include methyl phosphate (CAS No. 52932-95-3), ethyl phosphate (CAS No. 37203-76-2), butyl phosphate (CAS No. 107-66-4), phenyl phosphate (CAS No. 701-64-4), dimethyl phosphate (CAS No. 813-78-5), diethyl phosphate (CAS No. 598-02-7), dibutyl phosphate (CAS No. 107-66-4), diphenyl phosphate (CAS No. 838-85-7), trimethyl phosphate (CAS No. 512-56-1), triethyl phosphate (CAS No. 78-40-0), tributyl phosphate (CAS No. 126-73-8), and triphenyl phosphate (CAS No. 115-86-6).

Examples of the organic phosphite acids and organic phosphonate esters include methylphosphonic acid (CAS No. 993-13-5), ethylphosphonic acid (CAS No. :6779-09-5), butylphosphonic acid (CAS No. 3321-64-0), phenylphosphonic acid (CAS No. 1571-33-1), dimethyl phosphite (dimethyl phosphonate) (CAS No. 868-85-9), diethyl phosphite (diethyl phosphonate) (CAS No. 762-04-9), dibutyl phosphite (dibutyl phosphonate) (CAS No. 1809-19-4), diphenyl phosphite (diphenyl phosphonate) (CAS No. 4712-55-4), trimethyl phosphite (CAS No. 121-45-9), triethyl phosphite (CAS No. 122-52-1), and tributyl phosphite (CAS No. 102-85-2), and triphenyl phosphite (CAS No. 101-02-0).

Examples of the salts of the inorganic phosphorus compound and/or the organic phosphorus compound include ammonium salts, salts with organic nitrogen compounds, alkali metal salts, and alkaline earth metal salts of the inorganic phosphorus compound and/or the organic phosphorus compound.

Examples of the organic phosphinic acids include triphenylphosphine (CAS No. 603-35-0).

Examples of the ammonium salts, salts with organic nitrogen compounds, alkali metal salts, and alkaline earth metal salts of inorganic phosphate include ammonium phosphate, primary ammonium phosphate (CAS No. 7722-76-1), secondary ammonium phosphate (CAS No. 7783-28-0), sodium metaphosphate (CAS No. 10361-03-2), potassium metaphosphate (CAS No. 7790-53-6), sodium hexametaphosphate (CAS No. 10124-56-8), potassium hexametaphosphate, sodium pyrophosphate (CAS No. 7722-88-5), potassium pyrophosphate (CAS No. 7320-34-5), sodium polyphosphate (CAS No. 68915-31-1), potassium polyphosphate, sodium tripolyphosphate (CAS No. 7758-29-4), potassium tripolyphosphate (CAS No. 13845-36-8), sodium ultrapolyphosphate, and potassium ultrapolyphosphate.

The tantalate compound dispersion of the present invention preferably contains one or more phosphorus compounds selected from phosphoric acid (CAS No. 7664-38-2), condensed phosphoric acid, pyrophosphoric acid (CAS No. 2466-09-3), polyphosphoric acid (CAS No. 8071-16-1), phosphorous acid (CAS No. 13598-36-2), hypophosphorous acid (CAS No. 6303-21-5), ammonium phosphate, primary ammonium phosphate (CAS No. 7722-76-1), secondary ammonium phosphate (CAS No. 7783-28-0), ammonium pyrophosphate, and ammonium polyphosphate. The phosphorus compound is more preferably phosphoric acid or a phosphate salt when adjusting the solution to a pH closer to neutral. On the other hand, when the phosphorus compound is condensed phosphoric acid, or, as condensed phosphoric acids, pyrophosphoric acid, polyphosphoric acid, or a salt of condensed phosphoric acid, it is more preferable when adjusting the solution having a high pH.

In the present specification, "phosphoric acid" refers to orthophosphoric acid, and does not include phosphoric acids such as pyrophosphoric acid, polyphosphoric acid, and phosphorous acid. The phosphorus compound may form a compound with an alkali metal element or an alkaline earth metal element. For example, when the phosphorus compound contains a hydroxyl group (P-OH group), the phosphorus compound has a structure in which some or all of hydrogen atoms in the hydroxyl group are substituted with an alkali metal element or an alkaline earth metal element.

The tantalate compound dispersion of the present invention further contains a chlorine compound.

Examples of the chlorine compound include hydrochloric acid (CAS No. 7647-01-0), hypochlorous acid (CAS No. 7790-92-3), chlorous acid (CAS No. 13898-47-0), chloric acid (CAS No. 7790-93-4), and perchloric acid (CAS No. 7601-90-3).

The chlorine compound may be a salt of the chlorine compound described above, and examples thereof include an ammonium salt, an amine salt, a quaternary ammonium salt, and a lithium salt, and an ammonium salt and a lithium salt are preferable. Specific examples thereof include ammonium chloride (CAS No. 12125-02-9), ammonium perchlorate (CAS No. 7790-98-9), lithium chloride (CAS No. 7447-41-8), lithium perchlorate (CAS No. 7791-03-9), methylamine hydrochloride (CAS No. 593-51-1), and dimethylamine hydrochloride (CAS No. 506-59-2).

When the tantalate compound dispersion of the present invention contains a chlorine compound, it is preferable not to contain a chlorine compound when corrosion of the base material or elution of the base material is concerned depending on a material, a type, or the like of the base material to which the tantalate compound dispersion of the present invention is applied. For example, when the tantalate compound dispersion of the present invention is used for coating a positive electrode or positive electrode material for a lithium ion secondary battery to be described later, it is preferable not to contain a chlorine compound.

Furthermore, when the particle size (D50) of the particles in the tantalate compound dispersion by the dynamic light scattering method is 1000 nm or less, dispersibility is high, temporal changes are small, and the tantalate compound dispersion is stable, and the dispersion is preferable from the viewpoint of reactivity in a reaction with another substance or formation of a composite, and film uniformity during film formation. The particle size (D50) is preferably a smaller particle size, more preferably 800 nm or less, further preferably 600 nm or less, particularly preferably 500 nm or less, more particularly preferably 300 nm or less, still more preferably 200 nm or less, even more preferably 100 nm or less, even more preferably 50 nm or less, even more preferably 30 nm or less, even more preferably 20 nm or less, even more preferably 10 nm or less, even more preferably 8 nm or less, even more preferably 6 nm or less, even more particularly preferably 4 nm or less, even more particularly preferably 2 nm or less, even more particularly preferably 1 nm or less, even more particularly preferably 0.6 nm or less, and most preferably more than 0. Thus, a liquid in which the particle size (D50) of the tantalate compound particles in the tantalate compound dispersion of the present invention, as measured by dynamic light scattering method, is 1000 nm or less is defined as the "tantalate compound dispersion" of the present invention.

Here, the dynamic light scattering method is a method in which light scattering intensity from a group of particles moving in a Brownian motion is measured by irradiating a solution such as a suspension solution with light such as laser light, and a particle size and a distribution are determined from a temporal variation of the intensity. Specifically, the method for evaluating the particle size distribution is performed in accordance with JIS Z 8828:2019 "Particle size analysis-dynamic light scattering method" using a zeta potential/particle size/molecular weight measurement system (ELSZ-2000 manufactured by Otsuka Electronics Co., Ltd.). In order to remove dust or the like in the solution to be measured immediately before measurement, the solution is filtered with a filter having a pore size of 1 µm. The particle size (D50) refers to the median diameter (D50), which corresponds to the 50% cumulative value on the cumulative distribution curve. In addition, in the present specification, unless otherwise specified, the "particle size (D50)" includes both "initial particle size D50" indicating the particle size (D50) of the particles in the tantalate compound dispersion of the present invention adjusted to a liquid temperature of 25°C immediately after generation, and "temporal particle size D50" indicating the particle size (D50) of the particles in the tantalate compound dispersion after standing for 1 month from the day on which the tantalate compound dispersion of the present invention is generated in a thermostatic chamber set at a room temperature of 25°C.

The tantalate compound dispersion of the present invention is also characterized in that it is a tantalate compound dispersion containing tantalum, containing: at least one element X selected from the group consisting of an alkali metal element and/or an alkaline earth metal element; and a phosphorus compound and/or a chlorine compound, wherein a maximum value of transmittance in a wavelength region of 400 nm to 760 nm is 70%T or more.

The tantalum, at least one element X selected from the group consisting of an alkali metal element and/or an alkaline earth metal element, and the phosphorus compound and/or the chlorine compound in the tantalate compound dispersion of the present invention are as described above, and thus detailed description thereof is omitted.

In the tantalate compound dispersion of the present invention, when the maximum value of the transmittance in the wavelength region of 400 nm to 760 nm is 70%T or more, it is preferable from the viewpoint of high dispersibility and excellent uniformity of components in the liquid. The maximum value of the transmittance in the wavelength region of 400 nm to 760 nm is more preferably 72%T or more, further preferably 74%T or more, particularly preferably 76%T or more, particularly preferably 78%T or more, further particularly preferably 80%T or more, further particularly preferably 85%T or more, further more preferably 90%T or more, further still more preferably 95%T or more, particularly preferably 97%T or more, further still more preferably 98%T or more, more particularly preferably 99%T or more, and most preferably 100%T.

In addition, the tantalate compound dispersion of the present invention may have a transmittance of 70%T or more at any one wavelength of 400 nm, 600 nm, and 750 nm, or two or more of these wavelengths. The transmittance at the wavelength of any one of 400 nm, 600 nm, and 750 nm or two or more of these wavelengths may be 72%T or more, 74%T or more, 76%T or more, 78%T or more, 80%T or more, 85%T or more, 90%T or more, 95%T or more, 97%T or more, 98%T or more, 99%T or more, or 100%T or more.

Furthermore, in the tantalate compound dispersion of the present invention, the minimum value of transmittance in a wavelength region of 400 nm to 760 nm may be 70%T or more. The minimum value of the transmittance in the wavelength region of 400 nm to 760 nm may be 72%T or more, 74%T or more, 76%T or more, 78%T or more, 80%T or more, 85%T or more, 90%T or more, 95%T or more, 97%T or more, 98%T or more, 99%T or more, or 100%T or more.

Note that the measured value of transmittance described above may exceed 100%T due to a measurement error or the like, but since the theoretical upper limit value is 100%T, when the measured value exceeds 100%T, it is regarded as 100%T. As described above, the liquid in a state in which the maximum value of the transmittance of the tantalate compound dispersion of the present invention in the wavelength region of 400 nm to 760 nm is 70%T or more is referred to as the "tantalate compound dispersion" of the present invention. In the present specification, unless otherwise specified, the "transmittance" includes both "initial transmittance" indicating the transmittance of the tantalate compound dispersion of the present invention adjusted to a liquid temperature of 25°C immediately after generation, and "temporal transmittance" indicating the transmittance of the tantalate compound dispersion after being left standing for 1 month from the day on which the tantalate compound dispersion of the present invention is generated in a thermostatic chamber set at a room temperature of 25°C.

Here, the above-described transmittance is determined by measuring an ultraviolet-visible absorption spectrum (UV-Vis absorption spectrum) of the tantalate compound dispersion of the present invention in accordance with JIS K 0115, 2004 "General Rules for Ultraviolet-visible Spectrophotometry" according to the following transmittance measurement conditions.

### = Transmittance measurement condition =

- Measuring apparatus: ultraviolet-visible near-infrared spectrophotometer UH4150 type (manufactured by Hitachi High-Tech Science Corporation)
- Measurement mode: wavelength scan
- Data mode: %T (transmittance)
- Measurement wavelength range: 200 nm to 2000 nm
- Scan speed: 600 nm/min
- Sampling interval: 2 nm

Incidentally, the "dispersion" in the present invention is not limited to a dispersion in which a solute is dispersed or mixed in a state of a single molecule in a solvent, and includes an aggregate in which a plurality of molecules are attracted by intermolecular interaction, for example, a dispersion in which (1) a multimer molecule, (2) a solvate molecule, (3) a molecular cluster, (4) colloidal particles, and the like are dispersed in a solvent.

The tantalate compound dispersion of the present invention may further contain hydrogen peroxide.

Since the tantalate compound dispersion of the present invention can produce a tantalum compound aqueous solution by adding hydrogen peroxide water to a tantalum fluoride aqueous solution and mixing them in a method for producing a tantalate compound dispersion to be described later, the tantalate compound dispersion of the present invention may contain hydrogen peroxide.

In the method for detecting hydrogen peroxide in the tantalate compound dispersion of the present invention, the content of hydrogen peroxide in the dispersion can be determined by measuring the relative intensity of the absorbance of hydrogen peroxide with respect to the standard solution using, for example, a standard addition method. Specifically, the ultraviolet-visible absorption spectra of a standard solution containing a known content, for example, 1 mass% of hydrogen peroxide and a standard solution without hydrogen peroxide are compared to identify the wavelength region where absorbance changes due to peroxo complex formation are observed. When a difference in absorbance between a standard solution containing no hydrogen peroxide and a sample having an unknown hydrogen peroxide content in the wavelength region is less than 1%, it can be confirmed that the sample having an unknown hydrogen peroxide content does not substantially contain hydrogen peroxide. When hydrogen peroxide is present in the dispersion, it reacts with the tantalum polyacid to form a peroxo complex. Thus, as described above, by confirming the difference in absorbance from the standard solution without hydrogen peroxide, it can be verified that the dispersion does not contain hydrogen peroxide. In addition to the standard addition method described above, qualitative and quantitative analyses of hydrogen peroxide in the dispersion may also be performed, for example, by using a commercially available hydrogen peroxide detection kit. This can be done by adding a reagent that undergoes a colorimetric reaction with hydrogen peroxide and measuring the resulting coloration, or by adding a reagent that exhibits a fluorescent response to hydrogen peroxide and measuring the resulting fluorescence.

The tantalate compound dispersion of the present invention may further contain ammonia and/or an organic nitrogen compound.

The tantalate compound dispersion of the present invention may contain an ionized alkaline aqueous solution, such as a solution containing ammonia or an organic nitrogen compound. The content of ammonia and the organic nitrogen compound in the tantalate compound dispersion of the present invention is preferably 10 mass% or less, more preferably 5 mass% or less, still more preferably 3 mass% or less, particularly preferably 1 mass% or less based on 100 mass% of the tantalate compound dispersion of the present invention.

As will be described in detail in the method for producing the tantalate compound dispersion of the present invention to be described later, in the production process, the tantalate compound dispersion of the present invention is generated by first generating a tantalate-containing precipitate, which is a precipitate slurry containing tantalum, such as a hydrated ammonium tantalate cake via a reverse neutralization method in which an acidic aqueous solution of a tantalum complex is added to an alkaline aqueous solution such as aqueous ammonia. Accordingly, ammonia is considered to be present in the dispersion in the form of an ammonium ion as a cation. Furthermore, in the production process, a tantalum compound neutralized aqueous solution is generated by mixing the tantalate-containing precipitate, which is obtained via a reverse neutralization method in which an acidic solution is added to aqueous ammonia, with an organic nitrogen compound. Accordingly, the organic nitrogen compound is considered to be present in the dispersion as a cation.

Examples of the method for measuring the ammonia content present in the dispersion include a method in which sodium hydroxide is added to the dispersion to distill and separate ammonia, and the ammonia content is quantified by an ion meter, a method in which N₂ content in a gasified sample is quantified by a thermal conductivity meter, the Kjeldahl method, gas chromatography (GC), ion chromatography, and gas chromatography mass spectrometry (GC-MS). In particular, a method of quantifying the ammonia content by an ion meter is preferable.

Examples of the organic nitrogen compound include an aliphatic amine, an aromatic amine, an amino alcohol, an amino acid, a polyamine, a quaternary ammonium, a guanidine compound, and an azole compound.

Examples of the aliphatic amine include methylamine, dimethylamine, trimethylamine, ethylamine, methylethylamine, diethylamine, triethylamine, methyldiethylamine, dimethylethylamine, n-propylamine, din-propylamine, tri-n-propylamine, iso-propylamine, di-iso-propylamine, tri-iso-propylamine, n-butylamine, di-n-butylamine, tri-n-butylamine, iso-butylamine, di-iso-butylamine, tri-iso-butylamine and tert-butylamine, n-pentamine, n-hexylamine, cyclohexylamine, and piperidine.

Examples of the aromatic amine include aniline, phenylenediamine, and diaminotoluene. Examples of the amino alcohol include methanolamine, ethanolamine, propanolamine, butanolamine, pentanolamine, dimethanolamine, diethanolamine, trimethanolamine, methylmethanolamine, methylethanolamine, methylpropanolamine, methylbutanolamine, ethylmethanolamine, ethylethanolamine, ethylpropanolamine, dimethylmethanolamine, dimethylethanolamine, dimethylpropanolamine, methyldimethanolamine, methyldiethanolamine, diethylmethanolamine, trishydroxymethylaminomethane, bis(2-hydroxyethyl)aminotris(hydroxymethyl)methane, and aminophenol. Examples of the amino acid include alanine, arginine, aspartic acid, and EDTA. Examples of the polyamine include a polyamine and a polyether amine.

Examples of the quaternary ammonium include alkylimidazolium, pyridinium, pyrrolidium, and tetraalkylammonium. Specific examples of the alkylimidazolium include 1-methyl-3-methylimidazolium, 1-ethyl-3-methylimidazolium, 1-propyl-3-methylimidazolium, 1-butyl-3-methylimidazolium, 1-hexyl-3-methylimidazolium, 1-methyl-2,3-dimethylimidazolium, 1-ethyl-2,3-dimethylimidazolium, 1-propyl-2,3-dimethylimidazolium, and 1-butyl-2,3-dimethylimidazolium. Specific examples of pyridinium and pyrrolidium include N-butyl-pyridinium, N-ethyl-3-methyl-pyridinium, N-butyl-3-methyl-pyridinium, N-hexyl-4-(dimethylamino)-pyridinium, N-methyl-1-methylpyrrolidinium, and N-butyl-1-methylpyrrolidinium. Specific examples of tetraalkylammonium include tetramethylammonium, tetraethylammonium, tetrabutylammonium, and ethyl-dimethyl-propylammonium. Examples of the anion that forms a salt with the cation described above include OH⁻, Cl⁻, Br⁻, I⁻, BF₄⁻, and HSO₄⁻.

Examples of the guanidine compound include guanidine, diphenylguanidine, and ditolylguanidine. Examples of the azole compound include an imidazole compound and a triazole compound. Specific examples of the imidazole compound include imidazole, 2-methylimidazole, and 2-ethyl-4-methylimidazole. Specific examples of the triazole compound include 1,2,4-triazole, methyl 1,2,4-triazole-3-carboxylate, and 1,2,3-benzotriazole.

The organic nitrogen compound is preferably an aliphatic amine because it has high volatility and low toxicity. Specifically, an aliphatic amine having 1 to 4 carbon atoms is more preferable, and an aliphatic amine having 1 to 2 carbon atoms is particularly preferable. Examples thereof include methylamine and dimethylamine.

The organic nitrogen compound is preferably a quaternary ammonium compound, as it not only exhibits high solubility but also provides strong crystallization and sol formation inhibition. For example, the organic nitrogen compound is preferably a tetraalkylammonium salt, more preferably a tetraalkylammonium hydroxide salt, particularly preferably tetramethylammonium hydroxide and tetraethylammonium hydroxide and also particularly preferably tetramethylammonium hydroxide (TMAH).

Furthermore, the organic nitrogen compound may be a mixture of two or more selected from an aliphatic amine, an aromatic amine, an amino alcohol, an amino acid, a polyamine, a quaternary ammonium, a guanidine compound, and an azole compound, rather than a single species. For example, a mixture of two species of an aliphatic amine and a quaternary ammonium is preferable from the viewpoint that the solubility can be increased while suppressing the addition amount so as not to increase the toxicity.

Specific examples thereof include a mixture of two organic nitrogen compounds such as methylamine and tetramethylammonium hydroxide (TMAH), dimethylamine and tetramethylammonium hydroxide (TMAH), methylamine and dimethylamine, and a mixture of three organic nitrogen compounds such as methylamine, dimethylamine and tetramethylammonium hydroxide (TMAH).

Examples of the method for measuring the content of the organic nitrogen compound present in the tantalate compound dispersion of the present invention include gas chromatography (GC), liquid chromatography (LC), mass spectrometry (MS), gas chromatography/mass spectrometry (GC-MS), and liquid chromatography/mass spectrometry (LC-MS). When an organic nitrogen compound having low volatility is contained, measurement of the content of the organic nitrogen compound by liquid chromatography (LC) or liquid chromatography/mass spectrometry (LC-MS) is preferable.

The tantalate compound dispersion of the present invention is characterized in that a tantalum content in the tantalate compound dispersion is 0.01 mass% or more and 30 mass% or less in terms of Ta atoms.

The tantalum content in the tantalate compound dispersion of the present invention is preferably 0.01 mass% or more and 30 mass% or less in terms of Ta atoms from the viewpoint of achieving both practicality and stability of the tantalate compound dispersion, more preferably 0.5 mass% or more and 25 mass% or less in terms of Ta atoms, further preferably 1 mass% or more and 20 mass% or less in terms of Ta atoms, particularly preferably 1 mass% or more and 15 mass% or less in terms of Ta atoms, more particularly preferably 3 mass% or more and 10 mass% or less in terms of Ta atoms, and further particularly preferably 5 mass% or more and 10 mass% or less in terms of Ta atoms.

The tantalum content in the tantalate compound dispersion is calculated by appropriately diluting the dispersion with dilute hydrochloric acid as necessary, and measuring Ta mass% in terms of Ta atoms using highfrequency inductively coupled plasma emission spectrometry (ICP emission spectrometry (manufactured by Agilent Technologies Inc., AG-5110)) in accordance with JIS K0116:2014. When the tantalate in the tantalate compound dispersion of the present invention is one ionically bonded to an alkali metal or alkaline earth metal, for example, a lithium tantalate salt ionically bonded to a lithium ion, the lithium content may be calculated by measuring Li mass% in terms of Li atoms in the same manner as the tantalum content. By specifying the tantalum content and the lithium content in the tantalate compound dispersion of the present invention, the molar ratio Li/Ta of lithium (Li) to tantalum (Ta) of lithium tantalate contained in the tantalate compound dispersion of the present invention can be specified. The content of each element X of at least one element X selected from the group consisting of an alkali metal element and/or an alkaline earth metal element other than lithium can also be calculated by measuring X mass% of each element in terms of an element X atoms in the same manner as the tantalum content.

The tantalate compound dispersion of the present invention is also characterized in that a phosphorus content in the tantalate compound dispersion is 0.01 mass% or more and 10 mass% or less in terms of P atoms.

When the phosphorus content in the tantalate compound dispersion of the present invention is 0.01 mass% or more and 10 mass% or less in terms of P atoms, it is preferable from the viewpoint of improving dispersibility and solubility in a polar solvent, particularly water. The phosphorus content is more preferably 0.01 mass% or more and 5 mass% or less in terms of P atoms, still more preferably 0.05 mass% or more and 2 mass% or less in terms of P atoms, and particularly preferably 0.05 mass% or more and 1 mass% or less in terms of P atoms.

The phosphorus content in the tantalate compound dispersion of the present invention is calculated by appropriately diluting the dispersion with dilute hydrochloric acid as necessary, and measuring P mass% in terms of P atoms using ICP emission spectrometry (manufactured by Agilent Technologies Inc., AG-5110) in accordance with JIS K0116:2014.

The phosphorus content in the tantalate compound dispersion of the present invention is preferably analyzed by the ICP emission spectrometry described above, but can also be determined by measuring a ³¹P-NMR spectrum. Specifically, the phosphorus content in the tantalate compound dispersion of the present invention can be determined by the following procedure using a nuclear magnetic resonance apparatus (manufactured by Bruker Corporation: AVANCE NEO 600). A measurement sample is prepared by mixing 70 µL of the tantalate compound dispersion of the present invention and 650 µL of a phosphonoacetic acid deuterated water solution obtained by dissolving 10 g/L of phosphonoacetic acid in deuterated water. The adjusted measurement sample is subjected to ³¹P-NMR spectrum measurement according to the following ³¹P-NMR spectrum measurement conditions.

### =³¹P-NMR spectrum measurement conditions=

- Magnetic field: 14.1 T (1H 600 Mhz)
- Spectroscope: AVANCE NEO 600 manufactured by Bruker Corporation
- Measurement and data processing software: TopSpin manufactured by Bruker Corporation
- NMR probe: probe for solvent (type: PA BBO 600S3 BBF-H-D-05 Z SP)
- Solvent: heavy water
- Internal sample of chemical shift value and phosphorus content: phosphonoacetic acid
- Standard of chemical shift value: The apex of the central peak of the triplet peak of phosphonoacetic acid is set to 14.96 ppm.
- Spectrum center (O1 value - SR value (chemical shift value)): 0.00 ppm
- Radiofrequency pulse intensity: the intensity at which 14 µs corresponds to a 90-degree pulse at the center of irradiation.
- Radiofrequency pulse width: 14 µs
- Measurement interval: 80 µs (DW = 40 µs on the software)
- Number of measurement points: 32768 points (TD = 65536 on the software)
- Number of spectral points (SI on the software): 65536 points

By performing Fourier transform on the FID data measured under the above-described ³¹P-NMR spectrum measurement conditions without using a window function, a ³¹P-NMR spectrum is obtained. The peak area of the obtained ³¹P-NMR spectrum is calculated using the Integrate function of the measurement and data processing software described above, and the contents of phosphonoacetic acid and phosphate ions can be calculated from the peak area. For example, in the diphosphoric acid raw material, a ³¹P peak is observed at 6.5 ppm (estimated to be derived from PO₄ from the chemical shift value) and -1.7 ppm (estimated to be derived from P₂O₇ from the chemical shift value). In the phosphoric acid raw material, a ³¹P peak is observed at 6.2 ppm (estimated to be derived from PO₄). The chemical shift varies depending on the pH and other properties of each sample, and should therefore be taken into account in the calculations.

In the tantalate compound dispersion of the present invention, it is preferable that a chlorine content in the tantalate compound dispersion is 0.0 mass% or more and 2.0 mass% or less in terms of Cl atoms.

The chlorine content in the tantalate compound dispersion of the present invention is preferably 0.0 mass% or more and 2.0 mass% or less in terms of Cl atoms from the viewpoint of concern about corrosion of the base material. The chlorine content is more preferably 0.001 mass% or more and 2.0 mass% or less in terms of Cl atoms, further preferably 0.001 mass% or more and 0.5 mass% or less in terms of Cl atoms, particularly preferably 0.001 mass% or more and 0.2 mass% or less in terms of Cl atoms, and more particularly preferably 0.001 mass% or more and 0.1 mass% or less in terms of Cl atoms.

The chlorine content in the tantalate compound dispersion of the present invention is calculated by appropriately diluting the dispersion with dilute hydrochloric acid as necessary, and measuring Cl mass% in terms of Cl atoms using ICP emission spectrometry (manufactured by Agilent Technologies Inc., AG-5110) in accordance with JIS K0116:2014. At this time, the chlorine content in the tantalate compound dispersion of the present invention can be determined by subtracting the chlorine content derived from dilute hydrochloric acid used for dilution.

Furthermore, in the tantalate compound dispersion of the present invention, the total content of the phosphorus content in terms of P atoms and the chlorine content in terms of Cl atoms in the tantalate compound dispersion is preferably 0.01 mass% or more and 10 mass% or less.

When the total content in the tantalate compound dispersion of the present invention is 0.01 mass% or more and 10 mass% or less, it is preferable from the viewpoint of improving dispersibility and solubility in a polar solvent, particularly water. The total content is more preferably 0.01 mass% or more and 5 mass% or less, still more preferably 0.05 mass% or more and 2 mass% or less, and particularly preferably 0.05 mass% or more and 1 mass% or less.

The tantalate compound dispersion of the present invention is characterized in that a molar ratio M/Ta of a total amount (M) of the element X to tantalum (Ta) in the tantalate compound dispersion is 0.01 or more and 10 or less.

When the molar ratio M/Ta of the total amount (M) of the element X to tantalum (Ta) in the tantalate compound dispersion of the present invention is 0.01 or more and 10 or less, it is preferable from the viewpoint of improving dispersibility and solubility in water, it is more preferably 0.05 or more and 9 or less, it is still more preferably 0.1 or more and 8 or less, and it is particularly preferably 1 or more and 7 or less. The molar ratio M/Ta of the total amount (M) of the element X to tantalum (Ta) in the tantalate compound dispersion of the present invention may be 0.1 or more and 9 or less, or may be 0.1 or more and 7 or less.

In the tantalate compound dispersion of the present invention, the element X in the tantalate compound dispersion is Li, and a molar ratio Li/Ta of lithium (Li) to tantalum (Ta) is 0.01 or more and 10 or less.

When the element X in the tantalate compound dispersion of the present invention is Li and the molar ratio Li/Ta of lithium (Li) to tantalum (Ta) is 0.01 or more and 10 or less, it is preferable from the viewpoint of improving dispersibility and solubility in water, it is more preferably 0.05 or more and 9 or less, it is still more preferably 0.1 or more and 8 or less, and it is particularly preferably 1 or more and 7 or less. When the element X in the tantalate compound dispersion of the present invention is Li, the molar ratio Li/Ta of lithium (Li) to tantalum (Ta) is may be 0.1 or more and 9 or less, or may be 0.1 or more and 7 or less.

The tantalate compound dispersion of the present invention is also characterized in that a molar ratio M/(P+Cl) of a total amount (M) of the element X to a total amount (P+Cl) of the phosphorus compound and/or the chlorine compound in the tantalate compound dispersion is 0.01 or more and 5 or less.

When the molar ratio M/(P+Cl) of the total amount (M) of the element X to the total amount (P+Cl) of the phosphorus compound and/or the chlorine compound in the tantalate compound dispersion of the present invention is 0.01 or more and 5 or less, it is preferable from the viewpoint of improving dispersibility and solubility in water, it is more preferably 0.01 or more and 2 or less, it is still more preferably 0.05 or more and 2 or less, and it is particularly preferably 0.1 or more and 1.95 or less. In the present specification, unless otherwise specified, the total amount (P+Cl) of the phosphorus compound and/or the chlorine compound is the sum of a value (P) determined in terms of P atoms and a value (Cl) determined in terms of Cl atoms. In addition, the total amount (P+Cl) of the phosphorus compound and/or the chlorine compound is preferably Cl = 0 when the tantalate compound dispersion of the present invention is used for coating a positive electrode or positive electrode material for a lithium ion secondary battery to be described later.

In the tantalate compound dispersion of the present invention, the molar ratio M/P of the total amount (M) of the element X to the total amount (P) of the phosphorus compound in the tantalate compound dispersion is more preferably 0.01 or more and 5 or less.

When the molar ratio M/P of the total amount (M) of the element X to the total amount (P) of the phosphorus compound in the tantalate compound dispersion of the present invention is 0.01 or more and 5 or less, it is preferable from the viewpoint of improving dispersibility and solubility in water, it is more preferably 0.01 or more and 2 or less, it is still more preferably 0.05 or more and 2 or less, and it is particularly preferably 0.1 or more and 1.95 or less.

The tantalate compound dispersion of the present invention is also characterized in that the element X in the tantalate compound dispersion is Li, and a molar ratio Li/(P+Cl) of lithium (Li) to a total amount (P+Cl) of the phosphorus compound and/or the chlorine compound in the tantalate compound dispersion is 0.01 or more and 5 or less.

When the element X in the tantalate compound dispersion is Li, and the molar ratio Li/(P+Cl) of lithium (Li) to the total amount (P+Cl) of the phosphorus compound and/or the chlorine compound in the tantalate compound dispersion of the present invention is 0.01 or more and 5 or less, it is preferable from the viewpoint of improving dispersibility and solubility in water, it is more preferably 0.01 or more and 2 or less, it is still more preferably 0.05 or more and 2 or less, and it is particularly preferably 0.1 or more and 1.95 or less.

In the tantalate compound dispersion of the present invention, it is more preferable that the element X in the tantalate compound dispersion of the present invention is Li, and the molar ratio Li/P of lithium (Li) to the total amount (P) of the phosphorus compound in the tantalate compound dispersion is 0.01 or more and 5 or less.

When the element X in the tantalate compound dispersion of the present invention is Li and the molar ratio Li/P of lithium (Li) to the total amount (P) of the phosphorus compound is 0.01 or more and 5 or less, it is preferable from the viewpoint of improving dispersibility and solubility in water, it is more preferably 0.01 or more and 2 or less, it is still more preferably 0.05 or more and 2 or less, and it is particularly preferably 0.1 or more and 1.95 or less.

The tantalate compound dispersion of the present invention is also characterized in that a molar ratio Ta/(P+Cl) of tantalum (Ta) to a total amount (P+Cl) of the phosphorus compound and/or the chlorine compound in the tantalate compound dispersion is 0.01 or more and 10 or less.

When the molar ratio Ta/(P+Cl) of tantalum (Ta) to the total amount (P+Cl) of the phosphorus compound and/or the chlorine compound in the tantalate compound dispersion of the present invention is 0.01 or more and 10 or less, it is preferable from the viewpoint of improving dispersibility and solubility in water, it is more preferably 0.05 or more and 5 or less, it is still more preferably 0.1 or more and 3 or less, and it is particularly preferably 0.1 or more and 1.95 or less.

Furthermore, in the tantalate compound dispersion of the present invention, the molar ratio Ta/P of tantalum (Ta) to the total amount (P) of the phosphorus compound in the tantalate compound dispersion is more preferably 0.01 or more and 10 or less.

When the molar ratio Ta/P of tantalum (Ta) to the total amount (P) of the phosphorus compound in the tantalate compound dispersion of the present invention is 0.01 or more and 10 or less, it is preferable from the viewpoint of improving dispersibility and solubility in water, it is more preferably 0.05 or more and 5 or less, it is still more preferably 0.1 or more and 3 or less, and it is particularly preferably 0.1 or more and 1.95 or less.

The tantalate compound dispersion of the present invention is also characterized in that it is an aqueous dispersion.

Since the tantalate compound in the tantalate compound dispersion of the present invention has high dispersibility in water and good solubility in water, pure water can be used as a solvent. As the solvent, an organic solvent may be used. Examples of the organic solvent include an alcohol solvent, a ketone solvent, an ether solvent, an ester solvent, an aromatic hydrocarbon solvent, and an aliphatic hydrocarbon solvent, and a solvent obtained by mixing these organic solvents with pure water may be used. Examples of the alcohol solvent include alcohols having 5 or less carbon atoms (methanol, ethanol, n-propanol, isopropyl alcohol, butanol, ethylene glycol, propylene glycol), high boiling point solvents, and acetone. The solvent described above and water are preferably compatible. The tantalate compound dispersion of the present invention may contain one or more solvents in any proportion, as long as it does not impair the stability of the dispersion.

Examples of the high boiling point solvent include polyhydric alcohol-based solvents and glycol-based solvents. Examples of the polyhydric alcohol-based solvent include glycerin (boiling point: 290°C), 1,6-hexanediol (boiling point: 250°C), and 1,7-heptanediol (boiling point: 259°C). Examples of the glycol-based solvent include ethylene glycol (boiling point: 197.3°C), propylene glycol (boiling point: 188.2°C), diethylene glycol (boiling point: 244.3°C), triethylene glycol (boiling point: 287.4°C), oligoethylene glycol (boiling point: 287°C to 460°C), polyethylene glycol (PEG) (boiling point: 460°C or higher), polyethylene glycol (PEG)-polypropylene glycol (PPG) copolymer (boiling point: 460°C or higher), diethylene glycol monohexyl ether (boiling point: 260°C), polyoxyalkylene monoalkyl ether (boiling point: 260°C or higher), polyoxyethylene sorbitan monolaurate (boiling point: 321°C or higher), other anionic fluorine-based surfactants (boiling point: 180°C or higher), amphoteric fluorine-based surfactants (boiling point: 180°C or higher), nonionic fluorine-based surfactants (boiling point: 180°C or higher), and amine oxide (boiling point: 180°C or higher). The above-described boiling point is a boiling point at 1 atm.

The tantalate compound dispersion of the present invention is also characterized in that a pH of the tantalate compound dispersion is 2 or more and 11 or less.

When the pH of the tantalate compound dispersion of the present invention is 2 or more and 11 or less, polyacid ions contained in the dispersion are preferably stabilized. Depending on the intended application, the tantalate compound dispersion of the present invention may preferably be an acidic tantalate compound dispersion, a neutral tantalate compound dispersion, or a basic tantalate compound dispersion. In the present specification, unless otherwise specified, the "pH" represents both "initial pH" indicating the pH of the tantalate compound dispersion of the present invention adjusted to a liquid temperature of 25°C immediately after generation, and "temporal pH" indicating the pH of the tantalate compound dispersion after being left standing for 1 month from the day on which the tantalate compound dispersion of the present invention is generated in a thermostatic chamber set at a room temperature of 25°C.

When an acidic tantalate compound dispersion is preferable, the pH of the tantalate compound dispersion of the present invention is preferably less than 7, and preferably 2 or more and less than 7. When a neutral tantalate compound dispersion is preferable, the pH of the tantalate compound dispersion of the present invention is preferably 6 or more and 8 or less, and more preferably 7. Furthermore, when a basic tantalate compound dispersion is preferable, the pH of the tantalate compound dispersion of the present invention is preferably 7 or more, more preferably 8 or more, still more preferably 9 or more, and particularly preferably 10 or more. On the other hand, the pH is preferably 11 or less. Furthermore, the pH may be 11 or more or 12 or more. It is preferable that the tantalate compound dispersion of the present invention does not contain organic acids, since organic acids in the dispersion may alter the pH and, moreover, the components in the dispersion may interact with the organic acid.

The pH of the tantalate compound dispersion of the present invention is measured after immersing an electrode (standard ToupH electrode 9615 S-10D manufactured by HORIBA, Ltd.) of a pH meter (glass electrode type hydrogen ion concentration indicator D-51 manufactured by HORIBA, Ltd.) in the tantalate compound dispersion of the present invention and confirming that the liquid temperature is stabilized at 25°C.

In addition, the tantalate compound dispersion of the present invention may contain an element that does not constitute a tantalate compound contained in the tantalate compound dispersion of the present invention or a compound thereof as an additive. Examples of the additive include elements such as Al, Si, Ti, V, Mn, Fe, Co, Ni, Cu, Zn, Ge, Zr, Nb, Mo, Sn, La, and W, and compounds thereof. Examples of the compound include an oxide, a metal acid alkali metal salt, a metal acid alkaline earth metal salt, a chloride, a metal alkoxide, and polyoxometalate. Regarding the content of the additive in the tantalate compound dispersion of the present invention, when the total content mol number of each element as an additive is Z, the molar ratio Z/Ta of the total content mol number (Z) of each element as an additive to tantalum (Ta) may be 0.001 to 75, 0.002 to 50, 0.01 to 40, 0.2 to 30, 0.5 to 25, 0.8 to 1.5, 0.8 to 1.3, 0.9 to 1.2, or 0.9 to 1.1. The content of each element corresponding to the additive is calculated by measuring the mass% of each element in terms of each element atom in the same manner as the tantalum content described above. Furthermore, since the tantalate compound dispersion of the present invention is a uniform dispersion, improvement in uniformity and improvement in reactivity (reaction rate) are expected even when these compounds are in a suspension state. When these compounds are dissolved in the tantalate compound dispersion of the present invention to form a uniform dispersion, the complexing element can have the most favorable reactivity.

Furthermore, the tantalate compound dispersion of the present invention may contain components other than components derived from tantalum or tantalate, ammonia, organic nitrogen compounds, and components derived from element X, which are hereinafter referred to as 'other components', as long as they do not impair the functional effects of the dispersion. Examples of other components include Al, Si, Ti, V, Mn, Fe, Co, Ni, Cu, Zn, Ge, Zr, Nb, Mo, Sn, La, and W. However, the other components are not limited to these. When the tantalate compound dispersion of the present invention is defined as 100 mass%, the content of other components is preferably 5 mass% or less, more preferably 4 mass% or less, and still more preferably 3 mass% or less. The content of each element corresponding to the other component is calculated by measuring the mass% of each element in terms of each element atom in the same manner as the tantalum content described above. It is assumed that the tantalate compound dispersion of the present invention may contain inevitable impurities that are not intentionally added. The content of the inevitable impurities is preferably 0.01 mass% or less.

The tantalate compound powder of the present invention is characterized in that it contains a tantalate compound in the tantalate compound dispersion of the present invention described above.

The tantalate compound powder of the present invention includes both a dried powder obtained by drying the tantalate compound dispersion, for example, by vacuum drying, and a fired powder obtained by firing the resulting dried powder. The tantalate compound powder of the present invention also includes a tantalate compound powder having different physical properties such as a crystal structure generated by vacuum drying or firing the tantalate compound dispersion of the present invention, and may have an amorphous structure, a single crystal structure, or a polycrystalline structure. A method for producing the tantalate compound powder of the present invention will be described later.

The tantalate compound film of the present invention is characterized in that it contains a tantalate compound in the tantalate compound dispersion of the present invention described above.

The tantalate compound film of the present invention includes both a dried film obtained by applying the tantalate compound dispersion of the present invention to a surface of a base material and then drying, for example, by vacuum drying, and a fired film obtained by firing the resulting dried film. The tantalate compound film of the present invention also includes a tantalate compound film having different physical properties such as a crystal structure generated by vacuum drying or firing of the tantalate compound dispersion of the present invention, and may have an amorphous structure, a single crystal structure, or a polycrystalline structure. Since the tantalum compound which is a raw material of the tantalate compound film of the present invention has high chemical resistance, the surface of the base material is coated with the tantalate compound film of the present invention, whereby the high-temperature characteristics (for example, protection from deterioration of the base material due to heat) and chemical resistance of the base material can be improved. A method for producing the tantalate compound film of the present invention will be described later.

The coating agent of the present invention is characterized in that it contains the tantalate compound dispersion of the present invention described above.

The coating agent of the present invention contains the tantalate compound dispersion of the present invention which has high dispersibility in water, good solubility in water, and excellent storage stability.

The coating agent of the present invention is also characterized in that it contains the tantalate compound powder of the present invention described above.

The coating agent of the present invention contains the tantalate compound powder of the present invention which has high dispersibility in water, good solubility in water, and excellent storage stability.

The tantalate compound dispersion of the present invention is also characterized in that it is for coating a positive electrode or positive electrode material for a lithium ion secondary battery.

The tantalate compound dispersion of the present invention can also be used for coating a positive electrode or positive electrode material for a lithium ion secondary battery.

The positive electrode active material for a lithium ion secondary battery of the present invention is characterized in that a surface is coated with a tantalate compound contained in the tantalate compound dispersion of the present invention described above.

Specific examples of the positive electrode active material for a lithium ion secondary battery that can be used include LiMn₂O₄ (manufactured by Merck Corporation: spinel type, particle size <0.5 µm), LiCoO₂, LiNiO₂, LiFeO₂, Li₂MnO₃, LiFePO₄, LiCoPO₄, LiNiPO₄, LiMnPO₄, LiNi_{0.5}Mn_{1.5}O₄, LiMn_{1/3}Co_{1/3}Ni_{1/3}O₂, LiCo_{0.2}Ni_{0.4}Mn_{0.4}O₂, lithium molybdate, LiMnO₄, LiNi_{0.8}Co_{0.15}Al_{0.05}O₂, and LiMnO₂.

The lithium ion secondary battery of the present invention is characterized in that it has has a positive electrode whose surface is coated with the positive electrode active material for a lithium ion secondary battery of the present invention described above.

A method for producing the above-described tantalate compound dispersion of the present invention will be described below.

The method for producing a tantalate compound dispersion of the present invention may include a reaction step of adding hydrogen peroxide to a tantalum fluoride aqueous solution to generate a tantalum compound aqueous solution, a neutralization reaction step of adding the tantalum compound aqueous solution to an alkaline aqueous solution containing at least one element X selected from the group consisting of an alkali metal element and/or an alkaline earth metal element to generate a tantalum compound neutralized aqueous solution, and a mixing step of mixing the tantalum compound neutralized aqueous solution with a phosphorus compound or a phosphorus compound solution and/or a chlorine compound or a chlorine compound solution, or the like.

First, the tantalum fluoride aqueous solution can be prepared by reacting tantalum, tantalum oxide, or tantalum hydroxide with hydrofluoric acid (HF) such as an aqueous hydrofluoric acid solution to form tantalum fluoride (H₂TaF₇), and dissolving the tantalum fluoride in water.

The acidic tantalum solution containing fluoride ions, for example, the tantalum fluoride aqueous solution is preferably adjusted to contain 1 to 100 g/L of tantalum in terms of Ta₂O₅ by adding water (for example, pure water). At this time, it is preferable that the tantalum content is 1 g/L or more in terms of Ta₂O₅ since this facilitates the formation of a water-soluble tantalate compound hydrate. From the viewpoint of productivity, the tantalum content is more preferably 10 g/L or more and still more preferably 20 g/L or more. On the other hand, it is preferable that the tantalum content is 100 g/L or less in terms of Ta₂O₅ since this facilitates the formation of a water-soluble tantalate compound hydrate. For more reliable synthesis of such a water-soluble tantalate compound hydrate, the tantalum content is more preferably 90 g/L or less, still more preferably 80 g/L or less, and most preferably 70 g/L or less. The pH of the tantalum fluoride aqueous solution is preferably 2 or less and more preferably 1 or less from the viewpoint of completely dissolving tantalum or tantalum oxide.

Next, in the reaction step for producing a tantalum compound aqueous solution by adding hydrogen peroxide to a tantalum fluoride aqueous solution, the tantalum compound aqueous solution can be obtained by adding an aqueous hydrogen peroxide solution to the tantalum fluoride aqueous solution and mixing them. It is presumed that at least a part of the obtained tantalum compound aqueous solution forms a peroxo complex.

The hydrogen peroxide content of the hydrogen peroxide solution added to the tantalum fluoride aqueous solution is preferably 0.5 mass% to 35 mass%. Hydrogen peroxide is preferably added so that the molar ratio H₂O₂/Ta of hydrogen peroxide to tantalum is 0.6 or more and 1.5 or less, and more preferably 0.7 or more and 1.2 or less because hydrogen peroxide may be decomposed during mixing.

The neutralization reaction step of adding the obtained tantalum compound aqueous solution to an alkaline aqueous solution containing at least one element X selected from the group consisting of an alkali metal element and/or an alkaline earth metal element to generate a tantalum compound neutralized aqueous solution is as follows.

In the neutralization reaction step, first, the obtained tantalum compound aqueous solution is added to aqueous ammonia, that is, a precipitation slurry containing tantalum is obtained by a reverse neutralization method. Then, by removing fluoride ions from the obtained precipitation slurry containing tantalum, a tantalum-containing precipitate from which fluoride ions have been removed can be obtained.

The aqueous ammonia used for the reverse neutralization preferably has an ammonia content of 10 mass% to 30 mass%. When the ammonia content is 10 mass%, tantalum hardly remains undissolved, and tantalum or tantalate can be completely dissolved in water. On the other hand, when the ammonia content is 30 mass% or less, it is preferable because it is close to the saturation concentration of aqueous ammonia.

From such a viewpoint, the ammonia content of aqueous ammonia is preferably 10 mass% or more, more preferably 15 mass% or more, still more preferably 20 mass% or more, and particularly preferably 25 mass% or more. On the other hand, the ammonia content is preferably 30 mass% or less, more preferably 29 mass% or less, and still more preferably 28 mass% or less.

The amount of the tantalum fluoride aqueous solution to be added to the aqueous ammonia is preferably such that the molar ratio of NH₃/Ta is preferably 95 or more and 500 or less, more preferably 100 or more and 450 or less, and still more preferably 110 or more and 400 or less. In addition, from the viewpoint of generating tantalate compounds that are soluble in amines or dilute aqueous ammonia, the amount of the tantalum fluoride aqueous solution to be added to the aqueous ammonia is preferably such that the molar ratio of NH₃/HF is preferably 3.0 or more, more preferably 4.0 or more, and still more preferably 5.0 or more. On the other hand, from the viewpoint of cost reduction, the molar ratio of NH₃/HF is preferably 100 or less, more preferably 50 or less, and still more preferably 40 or less.

The time required for adding the tantalum fluoride aqueous solution to aqueous ammonia is preferably 10 minutes or less, more preferably 8 minutes or less, and still more preferably 5 minutes or less. That is, it is preferable that the tantalum fluoride aqueous solution is not gradually added over time, but is charged into aqueous ammonia in as short a time as possible, for example, charged at once, and subjected to a neutralization reaction. In addition, since an acidic tantalum fluoride aqueous solution is added to alkaline aqueous ammonia, a neutralization reaction can be performed while maintaining a high pH. The tantalum fluoride aqueous solution and the aqueous ammonia can be used at room temperature.

Then, by removing fluoride ions from the precipitation slurry containing tantalum obtained by the reverse neutralization method, a tantalum-containing precipitate from which fluoride ions have been removed can be obtained. Since a fluorine compound such as ammonium fluoride exists as an impurity in the precipitation slurry containing tantalum obtained by the reverse neutralization method, it is preferable to remove the fluorine compound.

A method for removing the fluorine compound is optional, and for example, a method by filtration using a membrane such as reverse osmosis filtration, ultrafiltration, or microfiltration using aqueous ammonia or pure water, centrifugation, or other known methods can be adopted. When fluoride ions are removed from the precipitation slurry containing tantalum, temperature adjustment is not particularly necessary, and it is possible to perform the removal at room temperature.

Specifically, the precipitation slurry containing tantalum obtained by the reverse neutralization method is decanted using a centrifuge, and washing is repeated until the amount of fluoride ions released is 100 mg/L or less, thereby obtaining a tantalum-containing precipitate from which fluoride ions have been removed. By repeating the washing, the hydrogen peroxide added in the reaction step is also removed by the washing.

The cleaning liquid used for removing fluoride ions is preferably aqueous ammonia. Specifically, aqueous ammonia in a concentration of 1 mass% or more and 35 mass% or less is preferred. Such aqueous ammonia is suitable for fluoride ions and enables the avoidance of unnecessary cost increases.

Next, in the neutralization reaction step, the tantalum-containing precipitate from which fluoride ions have been removed is diluted with pure water or the like to obtain a tantalum-containing precipitation slurry from which fluoride ions have been removed. Then, a mixture obtained by mixing the tantalum-containing precipitation slurry from which the fluoride ions have been removed, a hydroxide of the element X, for example, lithium hydroxide monohydrate, and pure water is held at 5°C to 100°C for 0.1 hours to 72 hours while being stirred, thereby obtaining a tantalum compound neutralized aqueous solution.

The mixing step of mixing the obtained tantalum compound neutralized aqueous solution with a phosphorus compound or a phosphorus compound solution and/or a chlorine compound or a chlorine compound solution is as follows.

In the mixing step, the phosphorus compound or the phosphorus compound solution and/or the chlorine compound or the chlorine compound solution are added to the obtained tantalum compound neutralized aqueous solution, and the mixture is mixed at room temperature for 0.1 hours to 2 hours to obtain a tantalate compound dispersion of the present invention.

The phosphorus compound may contain one or more selected from an inorganic phosphorus compound, an organic phosphorus compound, and a salt thereof.

Furthermore, it is preferable that the phosphorus compound contains one or more selected from phosphoric acid (CAS No. 7664-38-2), condensed phosphoric acid, pyrophosphoric acid (CAS No. 2466-09-3), polyphosphoric acid (CAS No. 8071-16-1), phosphorous acid (CAS No. 13598-36-2), hypophosphorous acid (CAS No. 6303-21-5), ammonium phosphate, primary ammonium phosphate (CAS No. 7722-76-1), secondary ammonium phosphate (CAS No. 7783-28-0), ammonium pyrophosphate, and ammonium polyphosphate.

The phosphorus compound solution may be a phosphorus compound solution in which pure water is added to the phosphorus compound described above, and the concentration thereof is adjusted so that the phosphorus content in the tantalate compound dispersion of the present invention is 0.01 mass% or more and 10 mass% or less in terms of P atoms.

Examples of the chlorine compound include hydrochloric acid (CAS No. 7647-01-0), hypochlorous acid (CAS No. 7790-92-3), chlorous acid (CAS No. 13898-47-0), chloric acid (CAS No. 7790-93-4), and perchloric acid (CAS No. 7601-90-3) .

The chlorine compound may be a salt of the chlorine compound described above, and examples thereof include an ammonium salt, an amine salt, a quaternary ammonium salt, and a lithium salt, and an ammonium salt and a lithium salt are preferable. Specific examples thereof include ammonium chloride (CAS No. 12125-02-9), ammonium perchlorate (CAS No. 7790-98-9), lithium chloride (CAS No. 7447-41-8), lithium perchlorate (CAS No. 7791-03-9), methylamine hydrochloride (CAS No. 593-51-1), and dimethylamine hydrochloride (CAS No. 506-59-2).

The chlorine compound solution may be a chlorine compound solution in which pure water is added to the chlorine compound described above, and the concentration thereof is adjusted so that the chlorine content in the tantalate compound dispersion of the present invention is 0.0 mass% or more and 2.0 mass% or less in terms of Cl atoms.

In the method for producing a tantalate compound dispersion of the present invention, in the mixing step, a phosphorus compound mixed solution and/or a chlorine compound mixed solution generated by mixing the phosphorus compound or the phosphorus compound solution and/or the chlorine compound or the chlorine compound solution and the element X in advance may be mixed with the tantalum compound neutralized aqueous solution.

In the mixing step in the method for producing a tantalate compound dispersion of the present invention, a phosphorus compound or a phosphorus compound solution and/or a chlorine compound or a chlorine compound solution may be mixed in advance with at least one element X selected from the group consisting of an alkali metal element and/or an alkaline earth metal element in a previous step of adding the phosphorus compound or the phosphorus compound solution and/or the chlorine compound or the chlorine compound solution to the tantalum compound neutralized aqueous solution to obtain a phosphorus compound mixed solution and/or a chlorine compound mixed solution.

Examples of the at least one element X selected from the group consisting of an alkali metal element and/or an alkaline earth metal element mixed in advance with the phosphorus compound or the phosphorus compound solution and/or the chlorine compound or the chlorine compound solution include lithium hydroxide monohydrate.

In order to remove the ammonia component contained in the obtained tantalate compound dispersion of the present invention, the following concentration adjustment step may be performed. In the concentration adjusting step, for example, the mixture is heated and stirred at 60°C to 90°C for 1 hour to 100 hours, and then cooled to room temperature. Thereafter, a solvent (pure water or the like) is added in order to replenish the evaporated solvent (pure water or the like). The addition amount of the solvent is adjusted so that the tantalum content of the tantalate compound dispersion of the present invention after removing the ammonia component coincides with the tantalum content of the tantalate compound dispersion of the present invention before removing the ammonia component.

Specifically, the tantalate compound dispersion of the present invention is obtained by mixing and stirring the obtained tantalum compound neutralized aqueous solution with the phosphorus compound or the phosphorus compound solution and/or the chlorine compound or the chlorine compound solution such that the tantalum content of the final mixture is 0.01 mass% or more and 30 mass% or less in terms of Ta atoms. The composition ratio of each component in the tantalate compound dispersion of the present invention thus obtained is preferably as follows.

When the element X contained in the tantalate compound dispersion of the present invention is lithium, and the molar ratio Li/(P+Cl) of lithium (Li) to the total amount (P+Cl) of the phosphorus compound and/or the chlorine compound in the tantalate compound dispersion of the present invention is 0.01 or more and 5 or less, it is preferable from the viewpoint of improving dispersibility and solubility in water, it is more preferably 0.01 or more and 2 or less, it is still more preferably 0.05 or more and 2 or less, and it is particularly preferably 0.1 or more and 1.95 or less. Also in the case where the element X contained in the tantalate compound dispersion of the present invention is an element X selected from an alkali metal and/or an alkaline earth metal element other than lithium, and the molar ratio M/(P+Cl) of the total amount (M) of the element X to the total amount (P+Cl) of the phosphorus compound and/or the chlorine compound in the tantalate compound dispersion of the present invention is 0.01 or more and 5 or less, it is preferable from the viewpoint of improving dispersibility and solubility in water, it is more preferably 0.01 or more and 2 or less, it is still more preferably 0.05 or more and 2 or less, and it is particularly preferably 0.1 or more and 1.95 or less. The case where the element X is a plurality of elements of lithium and another alkali metal element and/or an alkaline earth metal element, or a plurality of elements selected from an alkali metal element other than lithium and/or an alkaline earth metal is included.

When the element X contained in the tantalate compound dispersion of the present invention is lithium, and the molar ratio Li/P of lithium (Li) to the total amount (P) of the phosphorus compound in the tantalate compound dispersion of the present invention is 0.01 or more and 5 or less, it is preferable from the viewpoint of improving dispersibility and solubility in water, it is more preferably 0.01 or more and 2 or less, it is still more preferably 0.05 or more and 2 or less, and it is particularly preferably 0.1 or more and 1.95 or less. Also in the case where the element X contained in the tantalate compound dispersion of the present invention is an element X selected from an alkali metal and/or an alkaline earth metal element other than lithium, and the molar ratio M/P of the total amount (M) of the element X to the total amount (P) of the phosphorus compound in the tantalate compound dispersion of the present invention is 0.01 or more and 5 or less, it is preferable from the viewpoint of improving dispersibility and solubility in water, it is more preferably 0.01 or more and 2 or less, it is still more preferably 0.05 or more and 2 or less, and it is particularly preferably 0.1 or more and 1.95 or less.

Furthermore, when the molar ratio Ta/(P+Cl) of tantalum (Ta) to the total amount (P+Cl) of a phosphorus compound and/or a chlorine compound contained in the tantalate compound dispersion of the present invention is 0.01 or more and 10 or less, it is preferable from the viewpoint of improving dispersibility and solubility in water, it is more preferably 0.05 or more and 5 or less, it is still more preferably 0.1 or more and 3 or less, and it is particularly preferably 0.1 or more and 1.95 or less.

When the molar ratio Ta/P of tantalum (Ta) to the total amount (P) of a phosphorus compound contained in the tantalate compound dispersion of the present invention is 0.01 or more and 10 or less, it is preferable from the viewpoint of improving dispersibility and solubility in water, it is more preferably 0.05 or more and 5 or less, it is still more preferably 0.1 or more and 3 or less, and it is particularly preferably 0.1 or more and 1.95 or less.

When the element X contained in the tantalate compound dispersion of the present invention is lithium, and the molar ratio Li/Ta of lithium (Li) to tantalum (Ta) contained in the tantalate compound dispersion of the present invention is 0.01 or more and 10 or less, it is preferable from the viewpoint of improving dispersibility and solubility in water, it is more preferably 0.05 or more and 9 or less, it is still more preferably 0.1 or more and 8 or less, and it is particularly preferably 1 or more and 7 or less. Also in the case where the element X contained in the tantalate compound dispersion of the present invention is an element X selected from an alkali metal and/or an alkaline earth metal element other than lithium, and the molar ratio M/Ta of the total amount (M) of the element X to tantalum (Ta) is 0.01 or more and 10 or less, it is preferable from the viewpoint of improving dispersibility and solubility in water, it is more preferably 0.05 or more and 9 or less, it is still more preferably 0.1 or more and 8 or less, and it is particularly preferably 1 or more and 7 or less. The case where the element X is a plurality of elements of lithium and another alkali metal element and/or an alkaline earth metal element, or a plurality of elements selected from an alkali metal element other than lithium and/or an alkaline earth metal is included.

As another example of the method for producing a tantalate compound dispersion of the present invention, the method may include a reaction step of adding hydrogen peroxide to a tantalum fluoride aqueous solution to generate a tantalum compound aqueous solution, a neutralization reaction step of adding the tantalum compound aqueous solution to an alkaline aqueous solution containing an organic nitrogen compound to generate a tantalum compound neutralized aqueous solution, and a mixing step of adding a phosphorus compound mixed solution and/or a chlorine compound mixed solution generated by mixing a phosphorus compound or a phosphorus compound solution and/or a chlorine compound or a chlorine compound solution with at least one element X selected from the group consisting of an alkali metal element and/or an alkaline earth metal element to the tantalum compound neutralized aqueous solution and mixing them.

In another example of the method for producing a tantalate compound dispersion of the present invention, the steps until a tantalum-containing precipitation slurry from which fluoride ions have been removed is obtained are the same as the method for producing a tantalate compound dispersion of the present invention described above, and thus the detailed description thereof is omitted.

In the same manner as in the method for producing a tantalate compound dispersion of the present invention described above, a tantalum compound neutralized aqueous solution is obtained by mixing a tantalum-containing precipitation slurry, from which fluoride ions have been removed, with an organic nitrogen compound and pure water, and maintaining the mixture under stirring at 5 °C to 90 °C for 0.1 to 48 hours.

As described above, the organic nitrogen compound to be mixed with the tantalum-containing precipitation slurry is preferably an aliphatic amine, an aromatic amine, an amino alcohol, an amino acid, a polyamine, a quaternary ammonium, a guanidine compound, or an azole compound, and more preferably an aliphatic amine and/or a quaternary ammonium compound.

From the viewpoint of solubility, the aliphatic amine is preferably mixed so that the content of the aliphatic amine in the tantalum-containing precipitation slurry is 40 mass% or less, and more preferably 20 mass% or less. From the same viewpoint, mixing is preferably performed so that the content of the aliphatic amine in the tantalum-containing precipitation slurry is 0.1 mass% or more, more preferably 1 mass% or more, and may be 5 mass% or more or 10 mass% or more. The aliphatic amine is more preferably methylamine or dimethylamine.

From the viewpoint of solubility, the quaternary ammonium compound is preferably mixed so that the content of the quaternary ammonium compound in the tantalum-containing precipitation slurry is 40 mass% or less, and more preferably 20 mass% or less. From the same viewpoint, mixing is preferably performed so that the content of the quaternary ammonium compound in the tantalum-containing precipitation slurry is 0.1 mass% or more, more preferably 1 mass% or more, and may be 5 mass% or more or 10 mass% or more. The quaternary ammonium compound is more preferably tetramethylammonium hydroxide (TMAH) or tetraethylammonium hydroxide (TEAH).

In the mixing step in another example of the method for producing a tantalate compound dispersion of the present invention, a phosphorus compound mixed solution and/or a chlorine compound mixed solution generated by mixing a phosphorus compound or a phosphorus compound solution and/or a chlorine compound or a chlorine compound solution with at least one element X selected from the group consisting of an alkali metal element and/or an alkaline earth metal element are added to and mixed with the obtained tantalum compound neutralized aqueous solution.

The phosphorus compound mixed solution is generated by mixing a phosphorus compound or a phosphorus compound solution with at least one element X selected from the group consisting of an alkali metal element and/or an alkaline earth metal element in advance.

The phosphorus compound may contain one or more selected from an inorganic phosphorus compound, an organic phosphorus compound, and a salt thereof.

Furthermore, it is preferable that the phosphorus compound contains one or more selected from phosphoric acid (CAS No. 7664-38-2), condensed phosphoric acid, pyrophosphoric acid (CAS No. 2466-09-3), polyphosphoric acid (CAS No. 8071-16-1), phosphorous acid (CAS No. 13598-36-2), hypophosphorous acid (CAS No. 6303-21-5), ammonium phosphate, primary ammonium phosphate (CAS No. 7722-76-1), secondary ammonium phosphate (CAS No. 7783-28-0), ammonium pyrophosphate, and ammonium polyphosphate.

The phosphorus compound solution may be a phosphorus compound solution in which pure water is added to the phosphorus compound described above, and the concentration thereof is adjusted so that the phosphorus content in the tantalate compound dispersion of the present invention is 0.01 mass% or more and 10 mass% or less in terms of P atoms.

The chlorine compound mixed solution is generated by mixing a chlorine compound or a chlorine compound solution with at least one element X selected from the group consisting of an alkali metal element and/or an alkaline earth metal element in advance.

Examples of the chlorine compound include hydrochloric acid (CAS No. 7647-01-0), hypochlorous acid (CAS No. 7790-92-3), chlorous acid (CAS No. 13898-47-0), chloric acid (CAS No. 7790-93-4), and perchloric acid (CAS No. 7601-90-3) .

The chlorine compound may be a salt of the chlorine compound described above, and examples thereof include an ammonium salt, an amine salt, a quaternary ammonium salt, and a lithium salt, and an ammonium salt and a lithium salt are preferable. Specific examples thereof include ammonium chloride (CAS No. 12125-02-9), ammonium perchlorate (CAS No. 7790-98-9), lithium chloride (CAS No. 7447-41-8), lithium perchlorate (CAS No. 7791-03-9), methylamine hydrochloride (CAS No. 593-51-1), and dimethylamine hydrochloride (CAS No. 506-59-2).

The chlorine compound solution may be a chlorine compound solution in which pure water is added to the chlorine compound described above, and the concentration thereof is adjusted so that the chlorine content in the tantalate compound dispersion of the present invention is 0.0 mass% or more and 2.0 mass% or less in terms of Cl atoms.

Examples of the at least one element X selected from the group consisting of an alkali metal element and/or an alkaline earth metal element mixed in advance with the phosphorus compound or the phosphorus compound solution and/or the chlorine compound or the chlorine compound solution include lithium hydroxide monohydrate.

The order of adding the tantalum compound neutralized aqueous solution, the phosphorus compound or the phosphorus compound solution and/or the chlorine compound or the chlorine compound solution, the at least one element X selected from the group consisting of an alkali metal element and/or an alkaline earth metal element, pure water, and the like, which are mixed in the mixing step of the method for producing a tantalate compound dispersion of the present invention, is not limited to the above-described order, and can be appropriately changed.

A method for producing a tantalate compound powder containing a tantalate compound in the tantalate compound dispersion of the present invention will be described below.

In the method for producing a dried powder of a tantalate compound among the tantalate compound powders, the tantalate compound dispersion obtained by the above-described method for producing a tantalate compound dispersion of the present invention is placed in a static furnace, and dried, for example, vacuum dried, at a heating temperature of about 60 °C to 200°C for 1 hour to 72 hours, so that moisture of the tantalate compound dispersion of the present invention is evaporated, and a dried powder of a tantalate compound containing crystal particles of a tantalate compound contained in the tantalate compound dispersion of the present invention is obtained.

On the other hand, in the method for producing a fired powder of a tantalate compound, as described above, the tantalate compound dispersion of the present invention is vacuum-dried, and the obtained dried powder of the tantalate compound is placed in a static furnace and fired at a firing temperature of 300°C or higher and 1,200°C or lower and a firing time of 1 hour or more and 72 hours or less in the air, whereby a fired powder of a tantalate compound is obtained.

Pulverized forms of the above-described dried powder and fired powder of the tantalate compound may be used as the tantalate compound powder. Regardless of whether or not the powder is pulverized, the undersized fraction (fine particles) obtained by classifying the above-described dried powder and fired powder of the tantalate compound using a sieve or the like may be used as the tantalate compound powder. The oversized fraction (coarse particles) may be pulverized again and classified for use. It is also possible to use a vibrating sieve into which nylon, iron balls coated with a fluororesin, or the like are put as a pulverizing medium to perform both pulverization and classification. In this way, by combining classification and pulverization, excessively large tantalate compound powder particles can be removed if present. Specifically, when classification is performed using a sieve, it is preferable to use a sieve having a mesh size of 150 µm to 1,000 µm. When the mesh size is 150 µm to 1,000 µm, the proportion of oversized material does not become excessive, repeated re-pulverization can be avoided, and tantalate compound powder requiring further pulverization is not classified into the undersized fraction.

The tantalate compound powder thus obtained is mixed with water or an organic solvent as a dispersion medium, and wet-pulverized using a medium such as beads, whereby a tantalate compound powder dispersion can be obtained. Examples of the organic solvent used as the dispersion medium include alcohols, esters, ketones, aromatic hydrocarbons, aliphatic hydrocarbons, ethers, and mixed solvents thereof. Furthermore, in order to improve the film formability of the tantalate compound film using the tantalate compound powder dispersion, a binder such as a resin component may be added. Examples of the resin component used as the binder include an acrylic resin, polyurethane, an epoxy resin, polystyrene, polycarbonate, a glycol-based resin, a cellulose-based resin, and a mixed resin or copolymer resin thereof.

Further, a method for producing a tantalate compound film containing a tantalate compound in the tantalate compound dispersion of the present invention will be described below.

A method for producing a tantalate compound dried film among tantalate compound films includes: an applying step of applying a tantalate compound dispersion on a surface of a base material; and a film drying step of drying the tantalate compound dispersion applied to the surface of the base material to obtain a dried film.

Specifically, the tantalate compound dispersion obtained by the above-described method for producing a tantalate compound dispersion of the present invention is dropped onto the surface of the base material using a syringe while being filtered with, for example, a filter having a pore diameter of 1 µm, as necessary, and applied by spin coating at 700rpm for 10 seconds followed by 1500 rpm for 30 seconds. Next, the dispersion is dried at 110°C for 30 minutes to form the tantalate compound dried film on the surface of the base material.

A method for producing a fired film of a tantalate compound among producing films includes: an applying step of applying a tantalate compound dispersion onto a surface of a base material; a film drying step of drying the tantalate compound dispersion applied to the surface of the base material in the air or under vacuum to obtain a dried film; and a film firing step of firing the dried film in the air at a firing temperature of 300°C or higher and 1,200°C or lower and a firing time of 1 hour or more and 12 hours or less to obtain a fired film.

Specifically, as described above, the base material on which the tantalate compound dried film obtained by applying the tantalate compound dispersion onto the surface of the base material and drying the tantalate compound dispersion is formed is placed in a static furnace, and fired under the air at a firing temperature of 300°C or higher and 1,200°C or lower for a firing time of 1 hour or more and 12 hours or less to form a tantalate compound fired film on the surface of the base material.

Furthermore, a method for producing a positive electrode active material for a lithium ion secondary battery coated with the tantalate compound contained in the tantalate compound dispersion of the present invention will be described below.

The method for producing a positive electrode active material for a lithium ion secondary battery includes a step of mixing the tantalate compound dispersion of the present invention, a positive electrode active material, and an aqueous lithium hydroxide solution as necessary to produce a positive electrode active material slurry for a battery containing a tantalate compound; and a step of drying the positive electrode active material slurry for a battery containing the tantalate compound.

First, a positive electrode active material for a battery, for example, LiMn₂O₄ (manufactured by Merck Corporation: spinel type, particle size <0.5 µm) is added to a tantalate compound dispersion obtained by diluting the tantalate compound dispersion of the present invention with pure water to obtain a slurry containing a tantalate compound. Then, an aqueous lithium hydroxide solution is added dropwise while stirring the slurry containing a tantalate compound, and the mixture is held at 90°C for 10 minutes, whereby a positive electrode active material slurry for a battery containing a tantalate compound is generated.

Next, a positive electrode active material for a lithium ion secondary battery coated with a tantalate compound can be produced by holding the slurry of a positive electrode active material for a battery containing a tantalate compound at a temperature of 110°C in a furnace and drying the slurry in an air drying furnace for 15 hours.

In the present specification, the expression "X to Y" (where X and Y are arbitrary numerical values) encompasses not only the meaning of "X or more and Y or less" but also the meanings of "preferably greater than X" or "preferably less than Y", unless otherwise specified. Furthermore, the expressions "X or more" (where X is an arbitrary numerical value) and "Y or less" (where Y is an arbitrary numerical value) encompass the intentions "preferably greater than X" and "preferably less than Y", respectively.

### Advantageous Effects of Invention

The tantalate compound dispersion of the present invention has high dispersibility in a polar solvent, particularly water, has good solubility in water, and also has excellent storage stability. In addition, the method for producing a tantalate compound dispersion of the present invention can produce a tantalate compound dispersion having high dispersibility in a polar solvent, particularly water, good solubility in water, and excellent storage stability.

### Brief Description of Drawings

Fig. 1 is a list of physical property values of tantalate compound dispersions according to Examples 1 to 22 of the present invention and Comparative Examples 1 to 3.
Fig. 2 is a list of measurement results of physical property values of tantalate compound dispersions according to Examples 1 to 22 of the present invention and Comparative Examples 1 to 3.

### Best Mode for Carrying Out the Invention

Hereinafter, the tantalate compound dispersion of the embodiment according to the present invention will be further described with reference to the following Examples. However, the following examples do not limit the present invention.

### (Example 1)

In a polypropylene container, 0.315 g of pyrophosphoric acid (manufactured by FUJIFILM Wako Pure Chemical Corporation, product name: diphosphoric acid (containing phosphoric acid), CAS No. 2466-09-3) and 28.81 g of pure water were placed. To the obtained phosphorus compound aqueous solution, 0.87 g of a 5 mass% lithium hydroxide monohydrate aqueous solution was added to obtain a phosphorus compound mixed solution.

The 5 mass% lithium hydroxide monohydrate aqueous solution was obtained by mixing 15 g of LiOH·H₂O and 285 g of pure water.

To the phosphorus compound mixed solution, 4.96 g of a tantalum compound neutralized aqueous solution to be described later was added, and the mixture was stirred for 30 minutes and mixed to obtain a tantalate compound dispersion according to Example 1.

The tantalum compound neutralized aqueous solution according to Example 1 was obtained as follows.

First, 137.9 g of tantalum hydroxide (Ta₂O₅ content: 66 mass%) manufactured by Mitsui Mining & Smelting Corporation was dissolved in 120 g of a 55 mass% aqueous hydrofluoric acid solution, and 849 mL of pure water was added thereto to obtain a tantalum fluoride aqueous solution (Ta₂O₅ content: 8.2 mass%).

To 1,000 g of this tantalum fluoride aqueous solution, 36.1 g of hydrogen peroxide water (H₂O₂ content: 35 mass%) (H₂O₂/Ta molar ratio = 1.0) was added, and the resulting mixture was stirred for 5 minutes to obtain a tantalum compound aqueous solution.

To 6.82 L of aqueous ammonia (NH₃ concentration: 25 mass%), 1,036.1 g of the tantalum compound aqueous solution was added in a time less than 1 minute (NH₃/Ta molar ratio =245, NH₃/HF molar ratio = 30.6) to obtain a reaction liquid (pH 11). This reaction liquid was a slurry of a tantalate compound hydrate, in other words, a slurry of a tantalum-containing precipitate.

Next, this reaction liquid was decanted using a centrifuge and washed until the amount of fluoride ions released reached 100 mg/L or less to obtain a tantalum-containing precipitate from which the fluoride ions had been removed. At this time, aqueous ammonia was used as the cleaning liquid.

Further, the tantalum-containing precipitate from which the fluoride ions had been removed was diluted with pure water to obtain a tantalum-containing precipitation slurry. A part of the tantalum-containing precipitation slurry was dried at 110°C for 24 hours and then fired at 1,000°C for 4 hours to produce Ta₂O₅, and the content of Ta₂O₅ contained in the tantalum-containing precipitation slurry was calculated from the weight thereof.

Then, pure water whose temperature was adjusted to 70°C to 80°C, the tantalum-containing precipitation slurry diluted with pure water, and a 5 mass% lithium hydroxide monohydrate aqueous solution were mixed to obtain a tantalum compound neutralized aqueous solution according to Example 1. The tantalum content in the tantalum compound neutralized aqueous solution according to Example 1 was 4.06 mass%, and the lithium content was 0.14 mass%.

### (Example 2)

In Example 2, 0.318 g of pyrophosphoric acid and 26.85 g of pure water were placed in a polypropylene container, and 2.84 g of a 5 mass% lithium hydroxide monohydrate aqueous solution was added to the obtained phosphorus compound aqueous solution to obtain a phosphorus compound mixed solution.

To the phosphorus compound mixed solution, 4.96 g of the tantalum compound neutralized aqueous solution used in Example 1 was added, and the mixture was stirred for 30 minutes and mixed to obtain a tantalate compound dispersion according to Example 2.

The pyrophosphoric acid and the 5 mass% lithium hydroxide monohydrate aqueous solution used in Example 2 were the same as those in Example 1.

### (Example 3)

In Example 3, 0.307 g of pyrophosphoric acid and 25.57 g of pure water were placed in a polypropylene container, and 4.29 g of a 5 mass% lithium hydroxide monohydrate aqueous solution was added to the obtained phosphorus compound aqueous solution to obtain a phosphorus compound mixed solution.

To the phosphorus compound mixed solution, 4.95 g of the tantalum compound neutralized aqueous solution used in Example 1 was added, and the mixture was stirred for 30 minutes and mixed to obtain a tantalate compound dispersion according to Example 3.

The pyrophosphoric acid and the 5 mass% lithium hydroxide monohydrate aqueous solution used in Example 3 were the same as those in Example 1.

### (Example 4)

In Example 4, 0.58 g of pyrophosphoric acid and 15.96 g of pure water were placed in a polypropylene container, and 8.5 g of a 5 mass% lithium hydroxide monohydrate aqueous solution was added to the obtained phosphorus compound aqueous solution to obtain a phosphorus compound mixed solution.

To the phosphorus compound mixed solution, 9.93 g of the tantalum compound neutralized aqueous solution used in Example 1 was added, and the mixture was stirred for 30 minutes and mixed to obtain a tantalate compound dispersion according to Example 4.

The pyrophosphoric acid and the 5 mass% lithium hydroxide monohydrate aqueous solution used in Example 4 were the same as those in Example 1.

### (Example 5)

In Example 5, 0.92 g of pyrophosphoric acid and 6.4 g of pure water were placed in a polypropylene container, and 12.71 g of a 5 mass% lithium hydroxide monohydrate aqueous solution was added to the obtained phosphorus compound aqueous solution to obtain a phosphorus compound mixed solution.

To the phosphorus compound mixed solution, 14.83 g of the tantalum compound neutralized aqueous solution used in Example 1 was added, and the mixture was stirred for 30 minutes and mixed to obtain a tantalate compound dispersion according to Example 5.

The pyrophosphoric acid and the 5 mass% lithium hydroxide monohydrate aqueous solution used in Example 5 were the same as those in Example 1.

### (Example 6)

In Example 6, 0.142 g of pyrophosphoric acid and 26.76 g of pure water were placed in a polypropylene container, and 1.42 g of a 5 mass% lithium hydroxide monohydrate aqueous solution was added to the obtained phosphorus compound aqueous solution to obtain a phosphorus compound mixed solution.

To the phosphorus compound mixed solution, 6.66 g of the tantalum compound neutralized aqueous solution used in Example 1 was added, and the mixture was stirred for 30 minutes and mixed to obtain a tantalate compound dispersion according to Example 6.

The pyrophosphoric acid and the 5 mass% lithium hydroxide monohydrate aqueous solution used in Example 6 were the same as those in Example 1.

### (Example 7)

In Example 7, 0.081 g of pyrophosphoric acid and 27.11 g of pure water were placed in a polypropylene container, and 0.25 g of a 5 mass% lithium hydroxide monohydrate aqueous solution was added to the obtained phosphorus compound aqueous solution to obtain a phosphorus compound mixed solution.

To the phosphorus compound mixed solution, 7.43 g of the tantalum compound neutralized aqueous solution used in Example 1 was added, and the mixture was stirred for 30 minutes and mixed to obtain a tantalate compound dispersion according to Example 7.

The pyrophosphoric acid and the 5 mass% lithium hydroxide monohydrate aqueous solution used in Example 7 were the same as those in Example 1.

### (Example 8)

In Example 8, In a polypropylene container, 0.39 g of phosphoric acid (manufactured by FUJIFILM Wako Pure Chemical Corporation, product name: phosphoric acid, CAS No. 7664-38-2) and 25.33 g of pure water were placed. To the obtained phosphorus compound aqueous solution, 4.24 g of a 5 mass% lithium hydroxide monohydrate aqueous solution was added to obtain a phosphorus compound mixed solution.

To the phosphorus compound mixed solution, 4.97 g of the tantalum compound neutralized aqueous solution used in Example 1 was added, and the mixture was stirred for 30 minutes and mixed to obtain a tantalate compound dispersion according to Example 7.

The 5 mass% lithium hydroxide monohydrate aqueous solution used in Example 8 was the same as that in Example 1.

### (Example 9)

In Example 9, 4.93 g of the tantalum compound neutralized aqueous solution used in Example 1 was placed in a polypropylene container, and 4.25 of a 5 mass% lithium hydroxide monohydrate aqueous solution and 25.42 g of pure water were added thereto to obtain a tantalum compound mixed aqueous solution according to Example 9.

To the tantalum compound mixed aqueous solution according to Example 9, 0.29 g of pyrophosphoric acid was added, and the mixture was stirred for 30 minutes and mixed to obtain a tantalate compound dispersion according to Example 9.

The pyrophosphoric acid and the 5 mass% lithium hydroxide monohydrate aqueous solution used in Example 9 were the same as those in Example 1.

### (Example 10)

In Example 10, 4.25 of a 5 mass% lithium hydroxide monohydrate aqueous solution and 25.46 g of pure water were placed in a polypropylene container, and 4.94 g of the tantalum compound neutralized aqueous solution used in Example 1 was added thereto to obtain a tantalum compound mixed aqueous solution according to Example 10.

To the tantalum compound mixed aqueous solution according to Example 10, 0.31 g of pyrophosphoric acid was added, and the mixture was stirred for 30 minutes and mixed to obtain a tantalate compound dispersion according to Example 10.

The pyrophosphoric acid and the 5 mass% lithium hydroxide monohydrate aqueous solution used in Example 10 were the same as those in Example 1.

### (Example 11)

In Example 11, 4.23 g of a 5 mass% lithium hydroxide monohydrate aqueous solution and 25.47 g of pure water were placed in a polypropylene container, and 0.29 g of pyrophosphoric acid was added thereto to obtain a phosphorus compound mixed solution according to Example 11.

To the phosphorus compound mixed solution according to Example 11, 5.00 g of the tantalum compound neutralized aqueous solution used in Example 1 was added, and the mixture was stirred for 30 minutes and mixed to obtain a tantalate compound dispersion according to Example 11.

The pyrophosphoric acid and the 5 mass% lithium hydroxide monohydrate aqueous solution used in Example 11 were the same as those in Example 1.

### (Example 12)

In Example 12, to 0.32 g of pyrophosphoric acid placed in a polypropylene container, 25.57 g of pure water, 4.94 g of the tantalum compound neutralized aqueous solution used in Example 1, and 4.23 g of a 5 mass% lithium hydroxide monohydrate aqueous solution were added, and the mixture was stirred for 30 minutes and mixed to obtain a tantalate compound dispersion according to Example 12.

The pyrophosphoric acid and the 5 mass% lithium hydroxide monohydrate aqueous solution used in Example 12 were the same as those in Example 1.

### (Example 13)

In Example 13, to 4.93 g of the tantalum compound neutralized aqueous solution used in Example 1 placed in a polypropylene container, 25.43 g of pure water, 0.3 g of pyrophosphoric acid, and 4.24 g of a 5 mass% lithium hydroxide monohydrate aqueous solution were added, and the mixture was stirred for 30 minutes and mixed to obtain a tantalate compound dispersion according to Example 13.

The pyrophosphoric acid and the 5 mass% lithium hydroxide monohydrate aqueous solution used in Example 13 were the same as those in Example 1.

### (Example 14)

In Example 14, 0.15 g of pyrophosphoric acid and 27.18 g of pure water were placed in a polypropylene container, and 0.13 g of a 5 mass% lithium hydroxide monohydrate aqueous solution was added to the obtained phosphorus compound aqueous solution to obtain a phosphorus compound mixed solution.

To the phosphorus compound mixed solution, 7.53 g of the tantalum compound neutralized aqueous solution used in Example 1 was added, and the mixture was stirred for 30 minutes and mixed to obtain a tantalate compound dispersion according to Example 14.

The pyrophosphoric acid and the 5 mass% lithium hydroxide monohydrate aqueous solution used in Example 14 were the same as those in Example 1.

### (Example 15)

In Example 15, 0.19 g of phosphoric acid and 27.35 g of pure water were placed in a polypropylene container, and 0.13 g of a 5 mass% lithium hydroxide monohydrate aqueous solution was added to the obtained phosphorus compound aqueous solution to obtain a phosphorus compound mixed solution.

To the phosphorus compound mixed solution, 7.34 g of the tantalum compound neutralized aqueous solution used in Example 1 was added, and the mixture was stirred for 30 minutes and mixed to obtain a tantalate compound dispersion according to Example 15.

The phosphoric acid used in Example 15 was the same as that in Example 8, and the 5 mass% lithium hydroxide monohydrate aqueous solution was the same as that in Example 1.

### (Example 16)

In Example 16, 0.18 g of phosphoric acid and 26.71 g of pure water were placed in a polypropylene container, and 1.17 g of a 5 mass% lithium hydroxide monohydrate aqueous solution was added to the obtained phosphorus compound aqueous solution to obtain a phosphorus compound mixed solution.

To the phosphorus compound mixed solution, 6.96 g of the tantalum compound neutralized aqueous solution used in Example 1 was added, and the mixture was stirred for 30 minutes and mixed to obtain a tantalate compound dispersion according to Example 16.

The phosphoric acid used in Example 16 was the same as that in Example 8, and the 5 mass% lithium hydroxide monohydrate aqueous solution was the same as that in Example 1.

### (Example 17)

In Example 17, 0.19 g of pyrophosphoric acid and 14.79 g of pure water were placed in a polypropylene container to obtain a phosphorus compound aqueous solution, then 7.53 g of the tantalum compound neutralized aqueous solution used in Example 1 and 8.92 g of a tantalate aqueous solution were added thereto, and the mixture was stirred for 30 minutes and mixed to obtain a tantalate compound dispersion according to Example 17.

The tantalate aqueous solution used in Example 17 was obtained as follows.

First, 137.9 g of tantalum hydroxide (Ta₂O₅ content: 66 mass%) manufactured by Mitsui Mining & Smelting Corporation was dissolved in 120 g of a 55 mass% aqueous hydrofluoric acid solution, and 849 mL of pure water was added thereto to obtain a tantalum fluoride aqueous solution (Ta₂O₅ content: 8.2 mass%).

To 1,000 g of this tantalum fluoride aqueous solution, 28.9 g of hydrogen peroxide water (H₂O₂ content: 35 mass%) (H₂O₂/Ta molar ratio = 0.8) was added, and the resulting mixture was stirred for 5 minutes to obtain a tantalum compound aqueous solution.

To 6.82 L of aqueous ammonia (NH₃ concentration: 25 mass%), 1,028.9 g of the tantalum compound aqueous solution was added in a time less than 1 minute (NH₃/Ta molar ratio =245, NH₃/HF molar ratio = 30.6) to obtain a reaction liquid (pH 11). This reaction liquid was a slurry of a tantalate compound hydrate, in other words, a slurry of a tantalum-containing precipitate.

Next, this reaction liquid was decanted using a centrifuge and washed until the amount of fluoride ions released reached 100 mg/L or less to obtain a tantalum-containing precipitate from which the fluoride ions had been removed. At this time, aqueous ammonia was used as the cleaning liquid.

Further, the tantalum-containing precipitate from which the fluoride ions had been removed was diluted with pure water to obtain a tantalum-containing precipitation slurry.

Then, the tantalum-containing precipitation slurry diluted with pure water, 5 mass% dimethylamine, and pure water were mixed to obtain a tantalate aqueous solution according to Example 17.

The pyrophosphoric acid used in Example 17 is the same as that used in Example 1.

### (Example 18)

In Example 18, 3.37 g of 1 mol/L hydrochloric acid and 22.71 g of pure water were placed in a polypropylene container, and 4.22 g of a 5 mass% lithium hydroxide monohydrate aqueous solution was added to the obtained chlorine compound aqueous solution to obtain a chlorine compound mixed solution.

To the chlorine compound mixed solution, 4.65 g of a tantalum compound neutralized aqueous solution was added, and the mixture was stirred for 30 minutes and mixed to obtain a tantalate compound dispersion according to Example 18.

The tantalum compound neutralized aqueous solution used in Example 18 was obtained in the same manner as the tantalum compound neutralized aqueous solution according to Example 1 except that the concentration was adjusted so that the tantalum content was 3.89 mass% and the lithium content was 0.15 mass%.

The 5 mass% lithium hydroxide monohydrate aqueous solution used in Example 18 was the same as that in Example 1.

### (Example 19)

In Example 19, 0.28 g of phosphonic acid and 25.65 g of pure water were placed in a polypropylene container, and 4.3 g of a 5 mass% lithium hydroxide monohydrate aqueous solution was added to the obtained phosphorus compound aqueous solution to obtain a phosphorus compound mixed solution.

To the phosphorus compound mixed solution, 4.8 g of the tantalum compound neutralized aqueous solution used in Example 18 was added, and the mixture was stirred for 30 minutes and mixed to obtain a tantalate compound dispersion according to Example 19.

The 5 mass% lithium hydroxide monohydrate aqueous solution used in Example 19 was the same as that in Example 1.

### (Example 20)

In Example 20, 0.74 g of 30 mass% phosphinic acid and 25.3 g of pure water were placed in a polypropylene container, and 4.22 g of a 5 mass% lithium hydroxide monohydrate aqueous solution was added to the obtained phosphorus compound aqueous solution to obtain a phosphorus compound mixed solution.

To the phosphorus compound mixed solution, 4.69 g of the tantalum compound neutralized aqueous solution used in Example 18 was added, and the mixture was stirred for 30 minutes and mixed to obtain a tantalate compound dispersion according to Example 20.

The 5 mass% lithium hydroxide monohydrate aqueous solution used in Example 20 was the same as that in Example 1.

### (Example 21)

In Example 21, 0.3 g of 80 mass% P₂O₅ polyphosphoric acid and 25.72 g of pure water were placed in a polypropylene container, and 4.26 g of a 5 mass% lithium hydroxide monohydrate aqueous solution was added to the obtained phosphorus compound aqueous solution to obtain a phosphorus compound mixed solution.

To the phosphorus compound mixed solution, 4.73 g of the tantalum compound neutralized aqueous solution used in Example 18 was added, and the mixture was stirred for 30 minutes and mixed to obtain a tantalate compound dispersion according to Example 21.

The 5 mass% lithium hydroxide monohydrate aqueous solution used in Example 21 was the same as those in Example 1.

### (Example 22)

In Example 22, 0.62 g of triethyl phosphate and 25.52 g of pure water were placed in a polypropylene container, and 4.23 g of a 5 mass% lithium hydroxide monohydrate aqueous solution was added to the obtained phosphorus compound aqueous solution to obtain a phosphorus compound mixed solution.

To the phosphorus compound mixed solution, 4.68 g of the tantalum compound neutralized aqueous solution used in Example 18 was added, and the mixture was stirred for 30 minutes and mixed to obtain a tantalate compound dispersion according to Example 22.

The 5 mass% lithium hydroxide monohydrate aqueous solution used in Example 22 was the same as those in Example 1.

### (Comparative Example 1)

In Comparative Example 1, 0.3 g of pyrophosphoric acid and 25.56 g of pure water were placed in a polypropylene container, and 4.23 g of a 5 mass% lithium hydroxide monohydrate aqueous solution was added to the obtained phosphorus compound aqueous solution to obtain a phosphorus compound mixed solution.

To the phosphorus compound mixed solution, 0.26 g of lithium tantalate powder (manufactured by Kojundo Chemical Laboratory Co., Ltd.) was added, and the mixture was stirred for 30 minutes and mixed to obtain a tantalate compound dispersion according to Comparative Example 1.

The pyrophosphoric acid and the 5 mass% lithium hydroxide monohydrate aqueous solution used in Comparative Example 1 were the same as those in Example 1.

### (Comparative Example 2)

In Comparative Example 2, 3.3 g of 10 mass% sulfuric acid and 25.52 g of pure water were placed in a polypropylene container, and 4.24 g of a 5 mass% lithium hydroxide monohydrate aqueous solution was added to the obtained sulfur compound aqueous solution to obtain a sulfur compound mixed solution.

To the sulfur compound mixed solution, 4.69 g of the tantalum compound neutralized aqueous solution used in Example 18 was added, and the mixture was stirred for 30 minutes and mixed to obtain a tantalate compound dispersion according to Comparative Example 2.

The 5 mass% lithium hydroxide monohydrate aqueous solution used in Comparative Example 2 was the same as that in Example 1.

### (Comparative Example 3)

In Comparative Example 3, to 25.52 g of pure water placed in a polypropylene container, 6.58 g of a 5 mass% lithium hydroxide monohydrate aqueous solution and 4.68 g of the tantalum compound neutralized aqueous solution used in Example 18 were added, and the mixture was stirred for 30 minutes and mixed to obtain a tantalate compound dispersion according to Comparative Example 3.

The 5 mass% lithium hydroxide monohydrate aqueous solution used in Comparative Example 3 was the same as that in Example 1.

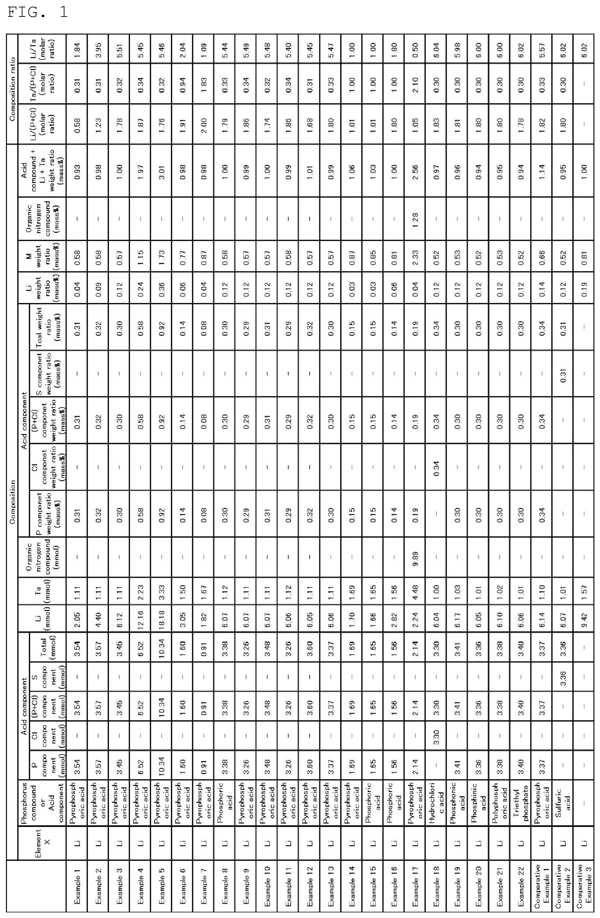

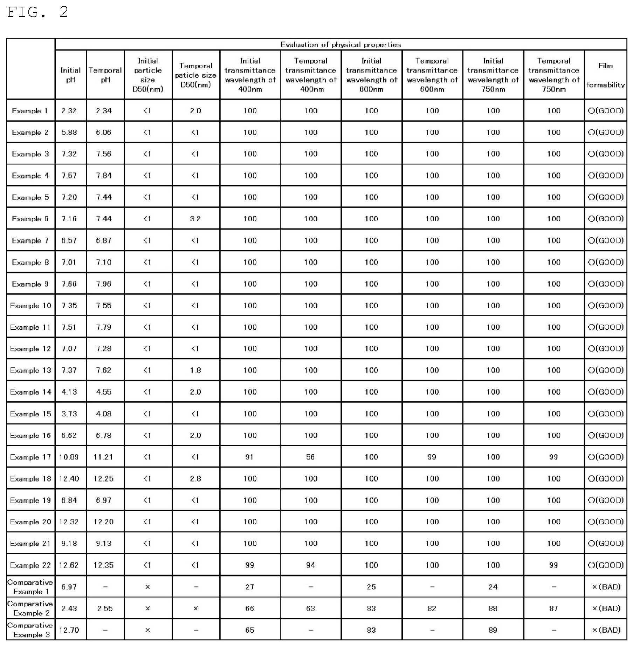

Then, the following physical properties were measured for the tantalate compound dispersions according to Examples 1 to 22 of the present invention and Comparative Examples 1 to 3. Hereinafter, the physical property values measured and the method for measuring the physical property values are shown, and the physical property values and measurement results of the tantalate compound dispersions according to Examples 1 to 22 of the present invention and Comparative Examples 1 to 3 are shown in Figs. 1 and 2.

### <Element Analysis>

A sample was appropriately diluted with dilute hydrochloric acid as necessary, and Ta mass% in terms of Ta atoms, P mass% in terms of P atoms, Li mass% in terms of Li atoms, Cl mass% in terms of Cl atoms, and S mass% in terms of S atoms in the tantalate compound dispersions according to Examples 1 to 22 and Comparative Examples 1 to 3 were measured using ICP emission spectrometry (manufactured by Agilent Technologies Inc., AG-5110) in accordance with JIS K0116:2014.

### <pH measurement>

The pH was measured in each of the tantalate compound dispersions according to Examples 1 to 22 and Comparative Examples 1 to 3 after confirming that an electrode (standard ToupH electrode 9615S-10D manufactured by HORIBA, Ltd.) of a pH meter (glass electrode type hydrogen ion concentration indicator D-51 manufactured by HORIBA, Ltd.) and the liquid temperature were stabilized at 25°C. The "initial pH" in Fig. 2 refers to the pH of the tantalate compound dispersion adjusted to a liquid temperature of 25°C immediately after generation. In addition, the "temporal pH" in Fig. 2 refers to the pH of the tantalate compound dispersion according to Examples 1 to 22 and Comparative Examples 1 to 3 after being left standing for 1 month in a thermostatic chamber set at a room temperature of 25°C from the day on which the tantalate compound dispersion was generated.

### <Dynamic light scattering method>

The evaluation of the particle size distribution was performed by a dynamic light scattering method in accordance with JIS Z 8828:2019 using a zeta potential/particle size/molecular weight measurement system (ELSZ-2000 manufactured by Otsuka Electronics Co., Ltd.). In order to remove dust and the like in the tantalate compound dispersion according to Examples 1 to 22 and Comparative Examples 1 to 3 to be measured immediately before measurement, the dispersion was filtered with a filter having a pore size of 1 µm to perform filtering. D50 represents the particle size at which the cumulative volume percentage reaches 50%. The "initial particle size D50 (nm)" in Fig. 2 refers to the particle size (D50) of the particles in the tantalate compound dispersion immediately after generation. In addition, the "temporal particle size D50 (nm)" in Fig. 2 refers to the particle size (D50) of the particles in the tantalate compound dispersion according to Examples 1 to 22 and Comparative Examples 1 to 3 after being left standing for 1 month in a thermostatic chamber set at a room temperature of 25°C from the day on which the tantalate compound dispersion was generated. The tantalate compound dispersion according to Comparative Example 1 was not subjected to particle size (D50) measurement, as precipitates were visually observed.

### <Transmittance measurement>

The transmittance in the wavelength region of 400 nm to 760 nm (specifically, transmittance at wavelengths of 400 nm, 600 nm, and 750 nm) of the tantalate compound dispersion according to Examples 1 to 22 and Comparative Examples 1 to 3 was measured using a spectrophotometer, by placing 3 ml of the tantalate compound dispersion according to Examples 1 to 22 and Comparative Examples 1 to 3 in a synthetic quartz cell having an optical path length of 5 mm, under the above-described transmittance measurement conditions. The "initial transmittance" in Fig. 2 refers to the transmittance of the tantalate compound dispersion adjusted to a liquid temperature of 25°C immediately after generation. In addition, the "temporal transmittance" in Fig. 2 refers to the transmittance of the tantalate compound dispersion according to Examples 1 to 22 and Comparative Examples 1 to 3 after being left standing for 1 month in a thermostatic chamber set at a room temperature of 25°C from the day on which the tantalate compound dispersion was generated.

### <Film formability test>

The appearance evaluation of a coating film formed on the surface of a glass substrate as a substitute for the current collecting plate was performed by observing the coating film with an optical microscope. First, the tantalate compound dispersion according to Examples 1 to 22 and Comparative Examples 1 to 3 was left to stand in a thermostatic chamber set at a room temperature of 25°C for 1 month from the day on which the tantalate compound dispersion according to Examples 1 to 22 and Comparative Examples 1 to 3 was generated. Next, the tantalate compound dispersion according to Examples 1 to 22 and Comparative Examples 1 to 3 after being left to stand for 1 month was dropped using a syringe onto a 50 mm × 50 mm glass substrate that had been degreased with acetone and dried, while being filtered with a filter having a pore diameter of 0.22 um, and applied by spin coating at 700 rpm for 10 seconds followed by 1500 rpm for 15 seconds. Then, the coated portion was dried in a static furnace at 110°C for 30 minutes to form a coating film on the glass substrate. The glass substrate was observed with an optical microscope (magnification: 40 times) in a range of 15 mm × 15 mm at the center of the formed coating film, and samples in which a film was formed without the presence of particles were rated as 'o (GOOD)' for excellent film formability, while those in which particles were observed were rated as '× (BAD)' for poor film formability.

As shown in Figs. 1 and 2, the tantalate compound dispersion according to Examples 1 to 22 contained tantalum, contained at least one element X selected from the group consisting of an alkali metal element and/or an alkaline earth metal element, and a phosphorus compound and/or a chlorine compound, and had high dispersibility in a dispersion medium and excellent solubility when the particle size (D50) of particles in the tantalate compound dispersion by a dynamic light scattering method was 1000 nm or less.

The tantalate compound dispersion according to Examples 1 to 22 contained tantalum, contained at least one element X selected from the group consisting of an alkali metal element and/or an alkaline earth metal element, and a phosphorus compound and/or a chlorine compound, and had high dispersibility in a dispersion medium and excellent solubility when the maximum value of transmittance in a wavelength region of 400 nm to 760 nm was 70%T or more.

The tantalate compound dispersions according to Examples 1 to 22 exhibited excellent temporal stability when the tantalum content in the tantalate compound dispersions according to Examples 1 to 22 was 0.01 mass% or more and 30 mass% or less in terms of Ta atoms.

The tantalate compound dispersions according to Examples 1 to 22 exhibited excellent temporal stability when the phosphorus content in the tantalate compound dispersions according to Examples 1 to 22 was 0.01 mass% or more and 10 mass% or less in terms of P atoms.

The tantalate compound dispersions according to Examples 1 to 22 exhibited excellent temporal stability, as the temporal particle size (D50) was not significantly different from the initial particle size (D50) even after 1 month had elapsed. In the tantalate compound dispersions according to Comparative Examples 1 to 3, precipitates were observed.

In the tantalate compound dispersions according to Examples 1 to 22, when the molar ratio M/Ta of tantalum (Ta) to the total amount (M) of at least one element X selected from the group consisting of an alkali metal element and/or an alkaline earth metal element was 0.01 or more and 10 or less, the stability during long-term storage was improved. Furthermore, in the case where the element X was Li, tantalate compound dispersions according to Examples 1 to 22 had improved stability during long-term storage when the molar ratio Li/Ta of lithium (Li) to tantalum (Ta) was 0.01 or more and 10 or less.

In the tantalate compound dispersion according to Examples 1 to 22, when the molar ratio M/(P+Cl) of the total amount (M) of at least one element X selected from the group consisting of an alkali metal element and/or an alkaline earth metal element to the total amount (P+Cl) of a phosphorus compound and/or a chlorine compound was 0.01 or more and 5 or less, the stability during long-term storage was improved. Furthermore, in the case where the element X was Li, the tantalate compound dispersions according to Examples 1 to 22 had improved stability during long-term storage when the molar ratio Li/(P+Cl) of lithium (Li) to the total amount (P+Cl) of the phosphorus compound and/or the chlorine compound was 0.01 or more and 5 or less. In the tantalate compound dispersion according to Comparative Example 2 in the item "Li/(P+ Cl)" in Fig. 1, it is a value of the molar ratio "Li/(P+ S)", and "S" is a value obtained in terms of S atoms.

The tantalate compound dispersions according to Examples 1 to 22 had improved stability during long-term storage when the molar ratio Ta/(P+Cl) of tantalum (Ta) to the total amount (P+Cl) of the phosphorus compound and/or the chlorine compound was 0.01 or more and 10 or less. In the tantalate compound dispersion according to Comparative Example 2 in the item "Ta/(P+ Cl)" in Fig. 1, it is a value of the molar ratio "Ta/(P+ S)", and "S" is a value obtained in terms of S atoms.

The tantalate compound dispersions according to Examples 1 to 22 exhibited excellent temporal stability when the pH of the dispersion was 2 or more and 11 or less.

In the tantalate compound film formed from the tantalate compound dispersion according to Examples 1 to 22, as a result of observing the coating film formed from each tantalate compound dispersion with an optical microscope, no coarse particles were present in the coating film, and the film formability was excellent.

The invention disclosed in the present specification includes not only the configurations of the respective inventions and embodiments, but also configurations in which partial elements thereof are replaced with other configurations disclosed herein, configurations in which other configurations disclosed herein are added thereto, or generalized configurations in which partial elements are deleted to the extent that partial effects can still be obtained, insofar as such modifications fall within the applicable scope.

### Industrial Applicability

The tantalate compound dispersion according to the present invention has high dispersibility in a polar solvent, particularly water, has good solubility in water, and also has excellent storage stability. In addition, the tantalate compound dispersion according to the present invention exhibits excellent storage stability, which suppresses the occurrence of defective products caused by precipitation due to temporal changes, thereby reducing waste and enabling a reduction in energy costs associated with waste disposal. These points lead to achieving sustainable management and efficient advantages of natural resources, and decarbonization (carbon neutral).

## Claims

1. A tantalate compound dispersion containing tantalum, comprising:
at least one element X selected from the group consisting of an alkali metal element and/or an alkaline earth metal element; and
a phosphorus compound and/or a chlorine compound, wherein
a particle size (D50) of particles in the tantalate compound dispersion by a dynamic light scattering method is 1000 nm or less.

2. A tantalate compound dispersion containing tantalum, comprising:
at least one element X selected from the group consisting of an alkali metal element and/or an alkaline earth metal element; and
a phosphorus compound and/or a chlorine compound, wherein
a maximum value of transmittance in a wavelength region of 400 nm to 760 nm is 70%T or more.

3. The tantalate compound dispersion according to claim 1 or 2, wherein the element X contains Li.

4. The tantalate compound dispersion according to claim 1 or 2, wherein the phosphorus compound contains one or more selected from an inorganic phosphorus compound, an organic phosphorus compound, and a salt thereof.

5. The tantalate compound dispersion according to claim 3, wherein the phosphorus compound contains one or more selected from phosphoric acid, condensed phosphoric acid, pyrophosphoric acid, polyphosphoric acid, phosphorous acid, hypophosphorous acid, ammonium phosphate, primary ammonium phosphate, secondary ammonium phosphate, ammonium pyrophosphate, and ammonium polyphosphate.

6. The tantalate compound dispersion according to claim 1 or 2, further comprising hydrogen peroxide.

7. The tantalate compound dispersion according to claim 1 or 2, further comprising ammonia and/or an organic nitrogen compound.

8. The tantalate compound dispersion according to claim 1 or 2, wherein a tantalum content in the tantalate compound dispersion is 0.01 mass% or more and 30 mass% or less in terms of Ta atoms.

9. The tantalate compound dispersion according to claim 1 or 2, wherein a phosphorus content in the tantalate compound dispersion is 0.01 mass% or more and 10 mass% or less in terms of P atoms.

10. The tantalate compound dispersion according to claim 1 or 2, wherein a molar ratio M/Ta of a total amount (M) of the element X to tantalum (Ta) in the tantalate compound dispersion is 0.01 or more and 10 or less.

11. The tantalate compound dispersion according to claim 1 or 2, wherein the element X in the tantalate compound dispersion is Li, and a molar ratio Li/Ta of lithium (Li) to tantalum (Ta) is 0.01 or more and 10 or less.

12. The tantalate compound dispersion according to claim 1 or 2, wherein a molar ratio M/(P+Cl) of a total amount (M) of the element X to a total amount (P+Cl) of the phosphorus compound and/or the chlorine compound in the tantalate compound dispersion is 0.01 or more and 5 or less.

13. The tantalate compound dispersion according to claim 1 or 2, wherein the element X in the tantalate compound dispersion is Li, and a molar ratio Li/(P+Cl) of lithium (Li) to a total amount (P+Cl) of the phosphorus compound and/or the chlorine compound in the tantalate compound dispersion is 0.01 or more and 5 or less.

14. The tantalate compound dispersion according to claim 1 or 2, wherein a molar ratio Ta/(P+Cl) of tantalum (Ta) to a total amount (P+Cl) of the phosphorus compound and/or the chlorine compound in the tantalate compound dispersion is 0.01 or more and 10 or less.

15. The tantalate compound dispersion according to claim 1 or 2, wherein the tantalate compound dispersion is an aqueous dispersion.

16. The tantalate compound dispersion according to claim 1 or 2, wherein a particle size (D50) of particles in the tantalate compound dispersion by a dynamic light scattering method is 100 nm or less.

17. The tantalate compound dispersion according to claim 1 or 2, wherein a pH of the tantalate compound dispersion is 2 or more and 11 or less.

18. A tantalate compound powder comprising a tantalate compound in the tantalate compound dispersion according to claim 1 or 2.

19. A tantalate compound film comprising a tantalate compound in the tantalate compound dispersion according to claim 1 or 2.

20. A coating agent comprising the tantalate compound dispersion according to claim 1 or 2.

21. A coating agent comprising the tantalate compound powder according to claim 17.

22. The tantalate compound dispersion according to claim 1 or 2, which is for coating a positive electrode or positive electrode material for a lithium ion secondary battery.

23. A positive electrode active material for a lithium ion secondary battery, wherein a surface is coated with a tantalate compound contained in the tantalate compound dispersion according to claim 1 or 2.

24. A lithium ion secondary battery comprising comprising a positive electrode whose surface is coated with the positive electrode active material for a lithium ion secondary battery according to claim 23.
